# FASCICULE DE BREVET EUROPEEN

(11) **EP 3 394 523 B1**
(45) Date de publication et mention de la délivrance du brevet: **02.10.2019**
(21) Numéro de dépôt: 16826423.2
(22) Date de dépôt: 20.12.2016
(51) Int. Cl.: F24S 50/00, F24S 50/20, F24S 80/00, G01J 1/04

(54) **DISPOSITIF DE MESURE DE FLUX RÉFLÉCHIS PAR UN CHAMP SOLAIRE MUNI D'UN SYSTÈME À CONFIGURATION VARIABLE PAR RAPPORT À DES PHOTODÉTECTEURS DUDIT DISPOSITIF DE MESURE**
VORRICHTUNG ZUR MESSUNG DER VON EINER SOLARZELLENANORDNUNG REFLEKTIERTEN FLÜSSE MIT EINEM SYSTEM MIT VARIABLER KONFIGURATION IN BEZUG AUF PHOTODETEKTOREN DER MESSVORRICHTUNG
DEVICE FOR MEASURING FLUXES REFLECTED BY A SOLAR CELL ARRAY PROVIDED WITH A SYSTEM HAVING VARIABLE CONFIGURATION WITH RESPECT TO PHOTODETECTORS OF SAID MEASUREMENT DEVICE

(30) Priorité: 21.12.2015 FR 1562973
(43) Date de publication de la demande: 31.10.2018
(73) Titulaire: Commissariat à l'Energie Atomique et aux Energies Alternatives, 75015 Paris (FR)
(72) Inventeur: ALBERT, Raphaël, 38300 Bourgoin Jallieu (FR); VIDAL, Frédéric, 38230 Charvieu (FR)
(74) Mandataire: GIE Innovation Competence Group
(86) Numéro de dépôt international: PCT/FR2016/053589
(87) Numéro de publication internationale: WO 2017/109396

(56) Documents cités:
- FR-A1- 2 972 530
- FR-A1- 2 981 737
- US-A1- 2003 197 114
- US-A1- 2013 168 552
- US-A1- 2014 361 394

## Description

### Domaine de l'invention

L'invention concerne le domaine des centrales solaires, et plus particulièrement des dispositifs de mesure permettant notamment de caractériser un champ solaire.

### État de la technique

Une centrale solaire utilise généralement un champ solaire orienté vers le soleil et configuré pour renvoyer les rayons solaires en direction d'un récepteur, notamment en les concentrant sur ce récepteur.

Pour une bonne efficacité de fonctionnement de la centrale solaire, cette dernière doit être configurée avec précision pour concentrer la lumière en direction du récepteur. Un champ solaire peut présenter une superficie importante, et la moindre anomalie du champ solaire peut induire une perte d'efficacité de la centrale solaire. Une anomalie peut typiquement être un réflecteur sale du champ solaire, ou encore un réflecteur du champ solaire mal orienté vers le récepteur.

Il en résulte donc un besoin d'outils permettant d'assurer que le rendement du récepteur est maximisé et/ou permettant de détecter une anomalie au niveau du champ solaire pour la corriger en vue d'améliorer l'efficacité de la centrale solaire.

L'état de l'art propose différentes réalisations répondant à ce besoin. En ce sens, il existe des systèmes permettant d'assurer que l'orientation d'un réflecteur solaire est correct, de tels système sont notamment décrits dans les documents US4,013,885 et US2012/0132194. Cependant, de tels systèmes permettent simplement de vérifier une orientation d'un concentrateur, mais ne permettent pas de mesurer son efficacité au niveau du récepteur.

Il existe en outre des systèmes permettant de quantifier les rayons solaires réfléchis par des réflecteurs en direction d'un récepteur. Le document FR2972530 propose un dispositif de mesure en vue de déterminer l'efficacité d'un assemblage comportant des réflecteurs et un récepteur.

Le document US5,861,947 décrit un dispositif de mesure de rayons concentrés utilisant une unique caméra en combinaison avec un miroir mobile.

Le document US2011/0180059 décrit quant à lui un dispositif de mesure de rayons concentrés utilisant des cellules photovoltaïques. Un robot est configuré pour se déplacer le long d'un récepteur et comporte un bras qui, lorsqu'il est déployé, oriente une ligne de cellules photovoltaïques en direction d'un champ solaire.

### Objet de l'invention

L'invention a pour objet un nouveau dispositif de mesure, permettant notamment de détecter plus facilement une anomalie.

On tend à satisfaire cet objet grâce à un dispositif de mesure de flux réfléchis par un champ solaire d'une centrale solaire en direction d'un récepteur de la centrale solaire et destiné à être monté au niveau du récepteur, ledit dispositif de mesure comportant : des premiers photodétecteurs alignés selon un axe d'alignement correspondant ; et un système configuré de sorte à délimiter pour chaque premier photodétecteur, dans une configuration d'utilisation du dispositif de mesure, une zone à surveiller du champ solaire, ledit système étant apte à varier entre une première configuration par rapport aux premiers photodétecteurs et une deuxième configuration par rapport aux premiers photodétecteurs de telle sorte que le passage de la première configuration à la deuxième configuration modifie simultanément la zone à surveiller de chacun des premiers photodétecteurs.

Le système comporte un cache présentant une mobilité par rapport aux premiers photodétecteurs, ledit cache étant configuré de sorte à permettre pour chaque position du cache par rapport aux premiers photodétecteurs, d'une part, d'empêcher une première partie des rayons issus du champ solaire d'atteindre les premiers photodétecteurs et, d'autre part, d'autoriser le passage d'une deuxième partie des rayons issus du champ solaire en direction des premiers photodétecteurs, et la mobilité du cache par rapport aux premiers photodétecteurs permet le passage de la première configuration à la deuxième configuration.

Selon une mise en oeuvre, le cache comporte une pluralité de lames montées à pivotement sur un support du dispositif de mesure intégrant les premiers photodétecteurs, les axe de pivotement des lames étant sensiblement orthogonaux, notamment perpendiculaires, à l'axe d'alignement des premiers photodétecteurs, les axes de pivotements desdites lames étant sensiblement parallèles entre eux, le mouvement possible des lames via les axes de pivotement correspondant à la mobilité du cache.

Notamment, pour chaque couple de premiers photodétecteurs adjacents, une lame de la pluralité de lames est montée à pivotement entre lesdits premiers photodétecteurs dudit couple, et la ligne de premiers photodétecteurs est encadrée par deux lames de la pluralité de lames.

Préférentiellement, les lames de la pluralité de lames sont solidaires en mouvement, et restent notamment toutes parallèles les unes aux autres quel que soit l'angle de pivotement desdites lames par rapport à leurs axes de pivotement respectifs.

Selon une autre mise en oeuvre, le cache comporte un organe, notamment une plaque, présentant une fente allongée dans une direction sensiblement orthogonale à l'axe d'alignement des premiers photodétecteurs, et quelle que soit la position de la fente par rapport auxdits premiers photodétecteurs, les seuls rayons issus du champ solaire et vus par lesdits premiers photodétecteurs passent par cette fente.

Le dispositif de mesure peut aussi comporter des deuxièmes photodétecteurs dont le nombre est égal à celui des premiers photodétecteurs, les deuxièmes photodétecteurs étant alignés selon un axe d'alignement parallèle à l'axe d'alignement des premiers photodétecteurs, et ledit système n'interceptant aucun des rayons issus du champ solaire en direction desdits deuxièmes photodétecteurs, alternativement le dispositif de mesure peut comporter un seul deuxième photodétecteur, ledit système n'interceptant aucun des rayons issus du champ solaire en direction dudit deuxième photodétecteur.

Le dispositif peut comprendre un module d'analyse relié à chacun des premiers photodétecteurs et configuré de sorte à traiter les données issues des premiers photodétecteurs pour établir une cartographie du flux solaire réfléchi par le champ solaire en direction du récepteur.

Selon une réalisation, le dispositif peut comporter une jauge de flux à effet thermique associée à l'un des premiers photodétecteurs, notamment ledit un des premiers photodétecteurs est aligné avec la jauge de flux à effet thermique selon un axe orthogonal, et notamment perpendiculaire, à l'axe d'alignement desdits premiers photodétecteurs.

L'invention est aussi relative à une centrale solaire comprenant un récepteur et un champ solaire muni de réflecteurs orientables pour réfléchir les rayons solaires en direction du récepteur, ladite centrale solaire comporte un dispositif de mesure tel que décrit disposé au niveau du récepteur.

Notamment, dans le cadre de ladite centrale, les réflecteurs sont des réflecteurs longitudinaux, chaque réflecteur longitudinal étant monté à rotation selon un axe de pivotement s'étendant selon sa longueur, et les axes de pivotement des réflecteurs longitudinaux étant sensiblement parallèles entre eux. Par ailleurs, le récepteur est placé à distance du champ solaire, et présente un axe longitudinal sensiblement parallèle aux axes de pivotement des réflecteurs. Ensuite, le dispositif de mesure est agencé de telle sorte que l'axe d'alignement des premiers photodétecteurs est sensiblement orthogonal à l'axe longitudinal du récepteur. Et enfin le dispositif de mesure est configuré de sorte à se déplacer le long du récepteur.

L'invention est aussi relative à un procédé d'utilisation d'un dispositif de mesure d'une centrale solaire telle que décrite et ce procédé comporte une étape de placement du dispositif de mesure à une pluralité de positions de mesure principale par rapport au récepteur, et une étape de mesure mise en oeuvre par les premiers photodétecteurs selon au moins la première configuration du système et la deuxième configuration du système, préférentiellement ladite étape de mesure est mise en oeuvre pour chaque position de mesure principale.

L'étape de placement du dispositif de mesure peut consister à déplacer le dispositif de mesure le long du récepteur de telle sorte qu'en toute position de mesure principale, l'axe d'alignement des photodétecteurs est sensiblement orthogonal à l'axe longitudinal du récepteur.

Selon une mise en oeuvre du procédé, ce dernier est tel que : le dispositif de mesure comporte au moins un deuxième photodétecteur agencé de telle sorte que le système n'intercepte pas les rayons issus du champ solaire et orientés vers chaque deuxième photodétecteur ; les premiers photodétecteurs et chaque deuxième photodétecteur sont chacun formé par une cellule photovoltaïque ; le dispositif de mesure comporte une jauge de flux à effet thermique associée à un photodétecteur de référence choisi parmi les premiers photodétecteurs ; et chaque étape de mesure consiste à déterminer des flux relatifs par chacun des premiers photodétecteurs et pour chaque configuration du système à ladite position de mesure principale correspondante, un flux étalon par chaque deuxième photodétecteur à ladite position de mesure principale correspondante, et un flux de référence par ladite jauge de flux à effet thermique à ladite position de mesure principale correspondante. Par ailleurs le procédé comporte alors une étape d'utilisation de chaque flux étalon déterminé, des flux relatifs déterminés et de chaque flux de référence déterminé pour élaborer une cartographie des flux perçus par le récepteur et issus du champ solaire.

Selon une autre mise en oeuvre du procédé, ce dernier est tel que le dispositif de mesure comporte des deuxièmes photodétecteurs alignés selon un axe sensiblement parallèle à l'axe d'alignement des premiers photodétecteurs et agencés de telle sorte que le système n'intercepte pas les rayons issus du champ solaire et orientés vers les deuxièmes photodétecteurs, et le procédé comporte au moins un ensemble d'étapes mis en oeuvre pour chaque premier photodétecteur, ledit ensemble d'étapes comprenant : un placement dudit premier photodétecteur à une position d'acquisition définie comme la position occupée par ledit premier photodétecteur dans une des positions de mesure principale du dispositif de mesure, puis une détermination à partir dudit premier photodétecteur placé dans ladite position d'acquisition de flux relatifs issus du champ solaire pour au moins les première et deuxième configurations du système ; un placement d'un des deuxièmes photodétecteurs associé audit premier photodétecteur à ladite position d'acquisition d'où il résulte que le dispositif de mesure occupe une position de mesure secondaire différente de ladite une des positions de mesure principale, puis une détermination à partir dudit un des deuxièmes photodétecteurs placé dans la position d'acquisition d'un flux étalon. Enfin dans cette autre mise en oeuvre, le procédé comporte une étape d'utilisation des flux étalons déterminés et des flux relatifs déterminés pour élaborer une cartographie des flux perçus par le récepteur et issus du champ solaire. Notamment, l'ensemble d'étapes peut être mis en oeuvre en association avec chaque position de mesure principale.

Selon un perfectionnement de cette autre mise en oeuvre, les premiers photodétecteurs sont chacun formé par une cellule photovoltaïque, le dispositif de mesure comporte une jauge de flux à effet thermique associée à un photodétecteur de référence choisi parmi les premiers photodétecteurs, l'ensemble d'étapes associé audit photodétecteur de référence comporte une étape de placement de la jauge de flux à effet thermique à ladite position d'acquisition d'où il résulte que le dispositif de mesure occupe une position de mesure additionnelle différente de ladite une des positions de mesure principale et de ladite position de mesure secondaire correspondantes, puis une étape de détermination à partir de ladite jauge thermique d'un flux de référence. Enfin l'étape d'utilisation comporte en outre l'utilisation de chaque flux de référence déterminé.

Selon une autre mise en oeuvre, le procédé est tel que les premiers photodétecteurs sont chacun formé par une cellule photovoltaïque, et que le dispositif de mesure comporte une jauge de flux à effet thermique associée à un photodétecteur de référence choisi parmi les premiers photodétecteurs. Dès lors, le procédé comporte, en association avec chaque position de mesure principale, les étapes suivantes : une étape de placement desdits premiers photodétecteurs à des positions d'acquisition définies comme les positions occupées par lesdits premiers photodétecteurs dans ladite position de mesure principale du dispositif de mesure ; une étape de détermination, pour chacun des premiers photodétecteurs placé dans sa position d'acquisition, de flux relatifs pour au moins les première et deuxième configurations du système ; une étape de placement de la jauge de flux à effet thermique à ladite position d'acquisition du photodétecteur de référence d'où il résulte que le dispositif de mesure occupe une position distincte de ladite position de mesure principale, et une étape de détermination d'un flux de référence à partir de ladite jauge de flux à effet thermique placée à ladite position d'acquisition. En outre, le procédé comporte une étape d'utilisation des flux de référence déterminés et des flux relatifs déterminés pour élaborer une cartographie des flux perçus par le récepteur et issus du champ solaire.

Selon encore une autre mise en oeuvre du procédé, le dispositif de mesure comporte un deuxième photodétecteur agencé de telle sorte que le système n'intercepte pas les rayons issus du champ solaire et orientés vers le deuxième photodétecteur, et le procédé comporte au moins un ensemble d'étapes mis en oeuvre pour chaque position de mesure principale comprenant : un placement desdits premiers photodétecteurs à des positions d'acquisition définies comme les positions occupées par lesdits premiers photodétecteurs dans ladite position de mesure principale du dispositif de mesure, puis une détermination à partir desdits premiers photodétecteurs placés dans lesdites positions d'acquisition de flux relatifs issus du champ solaire pour au moins les première et deuxième configurations du système ; un placement du deuxième photodétecteur dans une des positions d'acquisition d'où il résulte que le dispositif de mesure occupe une position de mesure secondaire différente de ladite position de mesure principale, puis une détermination à partir dudit deuxième photodétecteur placé dans la position d'acquisition d'un flux étalon. En outre, le procédé comporte une étape d'utilisation des flux étalons déterminés et des flux relatifs déterminés pour élaborer une cartographie des flux perçus par le récepteur et issus du champ solaire.

### Description des figures

L'invention sera mieux comprise à la lecture de la description qui va suivre, donnée uniquement à titre d'exemple non limitatif et faite en se référant aux dessins sur lesquels :
- la figure 1 est une illustration schématique vue en perspective d'un mode d'exécution particulier de l'invention,
- la figure 2 illustre vue en perspective d'un autre mode d'exécution de l'invention,
- la figure 3 est une vue de dessus d'une centrale solaire de type linéaire de Fresnel,
- la figure 4 est une vue selon A-A de la figure 3,
- les figures 5 et 6 illustrent les angles de vues respectivement pour un premier photodétecteur et pour plusieurs premiers photodétecteurs utilisés dans la réalisation de la figure 1,
- les figures 7 et 8 illustrent les angles de vues respectivement pour un premier photodétecteur et pour plusieurs premiers photodétecteurs utilisés dans la réalisation de la figure 2,
- la figure 9 illustre un perfectionnement du mode d'exécution de la figure 1,
- la figure 10 illustre un perfectionnement du mode d'exécution de la figure 2,
- les figures 11 à 13 illustrent différentes étapes d'un procédé d'utilisation du dispositif de mesure au sein d'une centrale solaire.

Dans ces figures, les mêmes références sont utilisées pour désigner les mêmes éléments.

### Description de modes préférentiels de réalisations de l'invention

Dans la suite de cette description, les caractéristiques et fonctions bien connues de l'homme du métier ne sont pas décrites en détails.

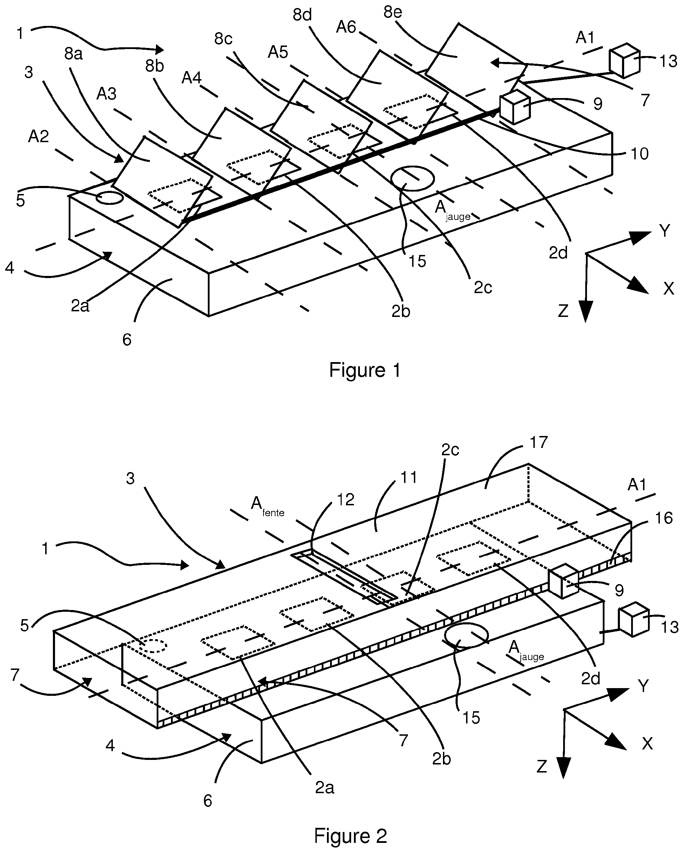

Sur les figures 1 à 10, un repère d'axes X, Y et Z perpendiculaires entre eux est représenté. Ce repère correspond au référentiel associé à une configuration d'utilisation d'un dispositif de mesure au sein d'une centrale solaire dans lequel les axes X et Y définissent un plan sensiblement horizontal et les axes X et Z - ou Y et Z- définissent un plan sensiblement vertical. Préférentiellement, l'axe X est sensiblement parallèle à l'axe Nord-Sud terrestre. En ce sens, le repère XYZ permet de situer le positionnement des éléments représentés auxdites figures 1 à 10 au sein de la centrale solaire lorsque celle-ci est fonctionnelle.

Dans la présente description, on entend par « sensiblement parallèle », exactement parallèle ou parallèle à plus ou moins 10 % de marge notamment dus aux jeux de montage des éléments - par exemples les axes - parallèles entre eux. De manière analogue, sensiblement vertical correspond à exactement vertical ou vertical à plus ou moins 10 % de marge, et sensiblement horizontal correspond à exactement horizontal ou horizontal à plus ou moins 10 % de marge.

Dans la présente description, lorsque l'on parle « d'axes orthogonaux », il s'agit de désigner deux axes dans l'espace parallèles à des droites virtuelles se coupant en angle droit. Par « sensiblement orthogonaux », on entend exactement orthogonaux ou orthogonaux à plus ou moins 10 % de marge pour les mêmes raisons que décrites ci-dessus. Dans un cas particulier, les éléments peuvent être sensiblement perpendiculaires entre eux, c'est à dire exactement perpendiculaires ou perpendiculaires à plus ou moins 10 % de marge.

Par flux, on entend dans la présente description une quantité, notamment de lumière, émise par le soleil et réfléchie par chaque réflecteur par unité de temps. Comme il sera décrit ci-après le flux peut alors être issu d'une zone surveillée d'un champ solaire. Le dispositif de mesure décrit ci-après permet donc de mesurer/déterminer des flux issus du champ solaire d'une centrale solaire en vue de caractériser ledit champ solaire ou les flux perçus par un récepteur de la centrale solaire.

Dans la présente description, un axe de pivotement permet la rotation d'un élément qui lui est associé autour dudit axe de pivotement, notamment selon une plage angulaire donnée autorisée et avantageusement contrôlée.

Les figures 1 et 2 illustrent un dispositif de mesure 1 de flux réfléchis par le champ solaire de la centrale solaire en direction du récepteur de la centrale solaire. Un tel dispositif de mesure 1 est destiné à être monté au niveau du récepteur, autrement dit, il est configuré de sorte à résister à des températures importantes dues à la concentration des rayons solaires réfléchis par le champ solaire. Notamment, le dispositif de mesure 1 est configuré de sorte à résister à des températures comprises entre -20°C et 80°C. Le dispositif de mesure peut se déplacer rapidement d'où il résulte qu'il n'a pas le temps de monter en température au-dessus de 80°C. Dès lors, lorsque le dispositif de mesure ne réalise pas de mesure, il est positionné dans une position de « garage » hors du flux, c'est à dire que les rayons réfléchis ne le sont pas dans sa direction : il peut alors refroidir.

Le dispositif de mesure 1 est notamment destiné à déterminer la contribution de chaque réflecteur du champ solaire dans la distribution de flux totale incidente au récepteur, et également selon les cas de permettre d'optimiser l'orientation et donc la visée des réflecteurs.

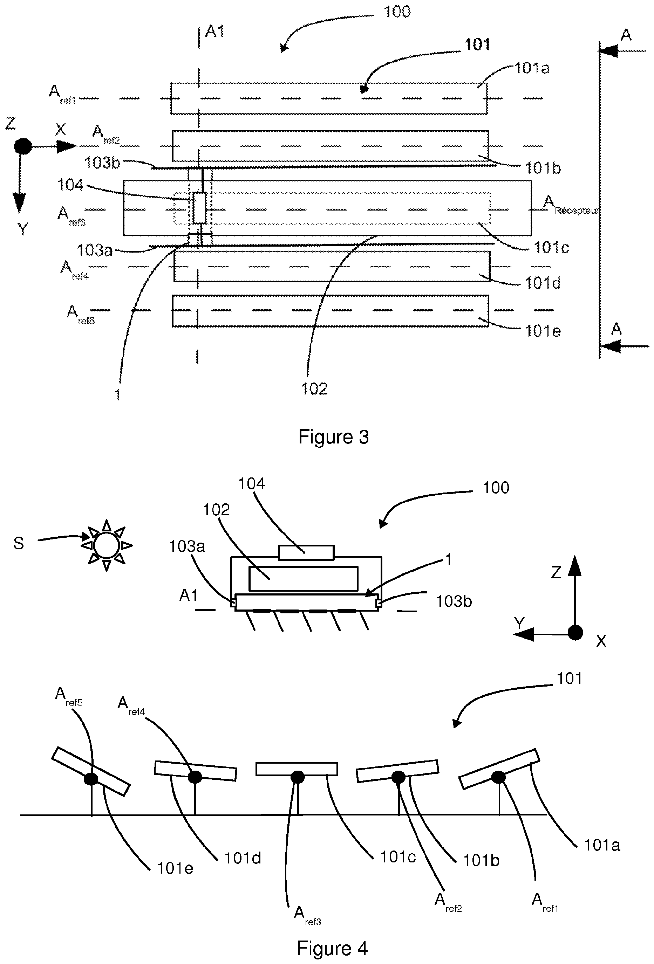

Les figures 3 et 4 illustrent le dispositif de mesure 1 dans une configuration d'utilisation, notamment au sein d'une centrale solaire 100 comprenant un champ solaire muni 101 d'une pluralité de réflecteurs 101a, 101b, 101c, 101d, 101e orientables pour réfléchir les rayons solaires en direction du récepteur 102. La centrale solaire 100 comporte alors le dispositif de mesure 1 disposé au niveau du récepteur 102. Préférentiellement, il s'agit d'une centrale solaire linéaire de Fresnel 100 pour laquelle le dispositif de mesure 1 est tout particulièrement adapté. Une telle centrale solaire linéaire de Fresnel comporte le champ solaire 101 composé des réflecteurs 101a, 101b, 101c, 101d, 101e formant des réflecteurs longitudinaux. Les réflecteurs longitudinaux 101a, 101b, 101c, 101d, 101e s'étendent préférentiellement selon l'axe Nord-Sud terrestre de sorte à suivre la course du soleil S d'Est en Ouest au cours de la journée. Chaque réflecteur longitudinal 101a, 101b, 101c, 101d, 101e est monté à rotation selon un axe de pivotement A_{ref1}, A_{ref2}, A_{ref3}, A_{ref4}, A_{ref5}, s'étendant selon sa longueur (et donc le cas échéant sensiblement parallèle à l'axe Nord Sud), et les axes de pivotement A_{ref1}, A_{ref2}, A_{ref3}, A_{ref4}, A_{ref5} des réflecteurs 101a, 101b, 101c, 101d, 101e sont sensiblement parallèles entre eux. Les axes de pivotement A_{ref1}, A_{ref2}, A_{ref3}, A_{ref4}, A_{ref5} sont sensiblement parallèles à l'axe X. En outre, le récepteur 102 de la centrale solaire 100 est placé à distance du champ solaire 101, et présente un axe longitudinal A_{Récepteur} orienté selon les axes de pivotement des réflecteurs 101a, 101b, 101c, 101d, 101e (sur la figure 3 A_{Récepteur} et A_{ref3} sont confondus car parallèles mais en superposition à des hauteurs différentes selon l'axe Z). Autrement dit, l'axe longitudinal A_{Récepteur} du récepteur est sensiblement parallèle aux axes de pivotement A_{ref1}, A_{ref2}, A_{ref3}, A_{ref4}, A_{ref5} des réflecteurs 101a, 101b, 101c, 101d, 101e, et donc sensiblement parallèle à l'axe X. Bien que cela ne soit pas représenté, le récepteur 102 est classiquement maintenu à distance du champ solaire par une armature métallique. Les axes de pivotement des réflecteurs 101a, 101b, 101c, 101d, 101e matérialisent la ligne focale desdits réflecteurs 101a, 101b, 101c, 101d, 101e. Chaque réflecteur 101a, 101b, 101c, 101d, 101e peut être plan, mais est généralement concave dans le plan transversal, c'est-à-dire le plan perpendiculaire à l'axe de pivotement correspondant dudit réflecteur. Pour une visée correcte, chaque réflecteur 101a, 101b, 101c, 101d, 101e se positionne tel que son vecteur normal au niveau de l'axe de pivotement associé soit aligné sur la bissectrice de l'angle formé entre la direction du soleil et la direction du récepteur 102 vues par ledit réflecteur. Chaque réflecteur 101a, 101b, 101c, 101d, 101e peut comporter une pluralité de miroirs définissant sa face réfléchissante. Les réflecteurs 101a, 101b, 101c, 101d, 101e peuvent être entraînés mécaniquement en rotation par un moteur et un système mécanique adapté dans le but de suivre le soleil tout au long de la journée pour réfléchir le flux solaire incident sur le récepteur 102 situé au-dessus du champ solaire 101.

Dans cette centrale solaire 100 de type linéaire de Fresnel, le dispositif de mesure 1 décrit ci-avant est agencé de telle sorte qu'un axe d'alignement A₁ de premiers photodétecteurs du dispositif de mesure 1 soit sensiblement orthogonal à l'axe longitudinal A_{Récepteur} du récepteur 102. Par « au niveau du récepteur 102 », on entend que le dispositif de mesure 1 peut être monté sous le récepteur 102 (préférentiellement entre le récepteur et le champ solaire), ou au plus près de celui-ci, en configuration d'utilisation.

Le récepteur 102 peut être un élément configuré pour recevoir les rayons concentrés du soleil réfléchis par le champ solaire 100. Plus particulièrement, le récepteur 102 permet d'emmagasiner une puissance, notamment sous forme de chaleur. Pour cela, le récepteur 102 peut comporter un absorbeur, par exemple formé par au moins un tube transportant un fluide caloporteur destiné à récupérer les calories issues des rayons solaires concentrés. Cette chaleur transmise au fluide caloporteur peut être stockée de manière latente ou sensible directement ou par le biais d'un échangeur secondaire, convertie en électricité, ou plus largement utilisée dans n'importe quel cycle thermodynamique - par exemple la production de froid - ou n'importe quel procédé industriel - par exemple une unité de dessalement.

Un photodétecteur au sens de la présente invention peut être une matrice de pixels, et préférentiellement une cellule photovoltaïque.

Au sein d'une telle centrale solaire 100, le dispositif de mesure 1 sera préférentiellement amené à, c'est-à-dire configuré de sorte à, se déplacer le long du récepteur 102 selon l'axe A_{Récepteur} dans une pluralité de positions de mesure principale. Notamment, pour chaque position de mesure principale, l'axe d'alignement A1 des premiers photodétecteurs reste sensiblement orthogonal à l'axe A_{Récepteur}. Dans le référentiel de la centrale solaire 100, le dispositif de mesure 1 est amené à se déplacer sous le récepteur 102, c'est-à-dire entre le récepteur 102 et le champ solaire 100 de telle sorte que pour chaque position de mesure principale, le dispositif de mesure 1 est soumis aux rayons (les rayons solaires réfléchis par le champ solaire) normalement perçus par le récepteur 102 au niveau de ladite position de mesure principale. En outre, les dimensions du dispositif de mesure 1 sont telles que lorsqu'il est amené à se déplacer sous le récepteur 102, son incidence quant au rendement de la centrale solaire 100 est négligeable.

Pour autoriser le déplacement du dispositif de mesure, ce dernier peut être accouplé à deux guides longitudinaux 103a, 103b et à un moteur 104 (figures 3 et 4) adapté pour le faire coulisser le long de ces deux guides longitudinaux.

Plus généralement, comme illustré en figures 1 et 2, le dispositif de mesure 1 comporte des premiers photodétecteurs 2a, 2b, 2c, 2d alignés selon l'axe d'alignement A1 correspondant. Il résulte de cet alignement des premiers photodétecteurs selon l'axe A1 que les premiers photodétecteurs 2a, 2b, 2c, 2d sont agencés de sorte à former une ligne de premiers photodétecteurs 2a, 2b, 2c, 2d. Sur les figures 1 et 2, ces premiers photodétecteurs 2a, 2b, 2c, 2d sont au nombre de quatre, ce nombre est nullement limitatif dans le sens où les premiers photodétecteurs 2a, 2b, 2c, 2d peuvent être plus nombreux ou moins nombreux. Le dispositif de mesure 1 comporte en outre un système 3 configuré de sorte à délimiter pour chaque premier photodétecteur 2a, 2b, 2c, 2d, dans la configuration d'utilisation du dispositif de mesure 1 (c'est-à-dire une configuration au sein de la centrale solaire où il est censé mesurer l'impact d'une partie des rayons solaires réfléchis par le champ solaire 101), une zone à surveiller du champ solaire 101. Ce système 3 est apte à varier entre une première configuration par rapport aux premiers photodétecteurs 2a, 2b, 2c, 2d et une deuxième configuration par rapport aux premiers photodétecteurs 2a, 2b, 2c, 2d de telle sorte que le passage de la première configuration à la deuxième configuration modifie simultanément la zone à surveiller de chacun des premiers photodétecteurs 2a, 2b, 2c, 2d.

Il a été décrit ci avant des première et deuxième configurations du système 3. Plus particulièrement, le système 3 peut comporter d'autres configurations. Notamment, le système 3 comporte un nombre de configurations tel que l'ensemble des zones surveillées permet, notamment pour une position de mesure principale donnée, de couvrir une partie du champ solaire 100 s'étendant entre deux réflecteurs latéraux d'extrémités disposés selon l'axe Y. Lorsque toutes les positions de mesure principales ont été utilisées par le dispositif de mesure 1, l'ensemble du champ solaire a été surveillé et il est donc possible de cartographier de manière fine les flux issus du champ solaire.

Selon une autre formulation le système 3 peut être apte à varier entre une première configuration par rapport aux premiers photodétecteurs 2a, 2b, 2c, 2d et une deuxième configuration par rapport aux premiers photodétecteurs de telle sorte que le passage de la première configuration à la deuxième configuration modifie simultanément l'angle de vue de l'ensemble des premiers photodétecteurs 2a, 2b, 2c, 2d. Bien entendu, lorsque le système 3 comporte plus de deux configurations et que le système 3 et les premiers photodétecteurs 2a, 2b, 2c, 2d comportent un axe de symétrie certaines des configurations pourraient avoir des angles de vues égaux, néanmoins on aura préférentiellement toujours parmi ces configurations au moins les première et deuxième configurations de telle sorte que les angles de vue changent tous simultanément lors du passage de la première configuration à la deuxième configuration et inversement.

Pour une configuration donnée du système 3 par rapport aux premiers photodétecteurs 2a, 2b, 2c, 2d, il est possible de déterminer pour chaque premier photodétecteur 2a, 2b, 2c, 2d un flux, notamment un flux relatif, correspondant à la quantité de lumière perçue par ledit premier photodétecteur 2a, 2b, 2c, 2d et réfléchie par une zone à surveiller correspondante. La détermination d'un flux par un photodétecteur peut être réalisée par mesure d'un signal de sortie de ce photodétecteur. Le flux est dit relatif car la mesure réalisée par les premiers photodétecteurs 2a, 2b, 2c, 2d n'est pas forcément uniquement fonction de la puissance solaire, elle peut varier en fonction de la température du premier photodétecteur 2a, 2b, 2c, 2d et du spectre reçu. Dans le but de pouvoir comparer les flux relatifs déterminés à partir des premiers photodétecteurs 2a, 2b, 2c, 2d, le dispositif de mesure 1 peut comporter un élément de maintien 4 de la température des premier photodétecteurs 2a, 2b, 2c, 2d à une température constante, et/ou un élément 5 permettant de connaître la température des premier photodétecteurs 2a, 2b, 2c, 2d en vue d'ajuster l'interprétation de leurs signaux pour que chacun des premiers photodétecteurs 2a, 2b, 2c, 2d au cours du temps puisse permettre de déterminer des valeurs de flux relatifs comparables. Sur les figures 1 et 2, l'élément de maintien 4 peut être formé par un support 6 intégrant les premiers photodétecteurs 2a, 2b, 2c, 2d et comprenant alors un système de refroidissement, et l'élément 5 permettant de connaître la température peut être une sonde de température intégrée au support 6. Selon une variante non représentée, un élément 5 formé par un thermocouple est installé sur chaque premier photodétecteur 2a, 2b, 2c, 2d pour permettre de connaître la température de chaque premier photodétecteur en vue de réaliser une interprétation correcte et comparable de l'ensemble des flux, notamment relatifs issus des premiers photodétecteurs.

En particulier, dans la configuration d'utilisation du dispositif de mesure 1, les rayons incidents aux premiers photodétecteurs 2a, 2b, 2c, 2d proviennent/sont réfléchis du champ solaire 101. Les rayons visés dans la présente description et impactant le dispositif de mesure, en particulier les premiers photodétecteurs ou autre, sont notamment des rayons solaires réfléchis par le champ solaire. Ainsi, les rayons vus par les premiers photodétecteurs 2a, 2b, 2c, 2d dans la configuration d'utilisation sont ceux directement réfléchis par le champ solaire 101 sans interposition d'un élément réfléchissant tierce disposé entre le champ solaire 101 et les premiers photodétecteurs 2a, 2b, 2c, 2d et modifiant le chemin desdits rayons vus par les premiers photodétecteurs 2a, 2b, 2c, 2d.

Comme visible aux figures 1 et 2, chacun des premiers photodétecteurs 2a, 2b, 2c, 2d comporte une face sensible destinée à recevoir des rayons lumineux. Les faces sensibles sont préférentiellement agencées de sorte à être toutes incluses dans un même plan, notamment de façon à délimiter un plan de mesure.

Plus particulièrement, le système 3 comporte un cache 7 présentant une mobilité par rapport aux premiers photodétecteurs 2a, 2b, 2c, 2d. Ce cache 7 est configuré de sorte à permettre pour chaque position du cache 7 par rapport aux premiers photodétecteurs 2a, 2b, 2c, 2d, d'une part, d'empêcher une première partie des rayons issus du champ solaire 101 de la centrale solaire 100 d'atteindre les premiers photodétecteurs 2a, 2b, 2c, 2d, et d'autre part, d'autoriser le passage d'une deuxième partie des rayons issus du champ solaire 101 de la centrale solaire 100 en direction des premiers photodétecteurs 2a, 2b, 2c, 2d. La mobilité de ce cache 7 par rapport aux premiers photodétecteurs 2a, 2b, 2c, 2d permet le passage de la première configuration à la deuxième configuration.

Selon une première réalisation du cache 7 illustrée en figure 1, ce dernier comporte une pluralité de lames 8a, 8b, 8c, 8d, 8e montées à pivotement sur le support 6 du dispositif de mesure 1 intégrant les premiers photodétecteurs 2a, 2b, 2c, 2d. Les axes de pivotement A2, A3, A4, A5, A6 des lames 8a, 8b, 8c, 8d, 8e sont sensiblement orthogonaux, et notamment perpendiculaires, à l'axe d'alignement A1 des premiers photodétecteurs 2a, 2b, 2c, 2d. Les axes de pivotements A2, A3, A4, A5, A6 desdites lames 8a, 8b, 8c, 8d, 8e sont sensiblement parallèles entre eux.

En particulier, deux premiers photodétecteurs adjacents sont séparés par une lame. Notamment, pour chaque couple de premiers photodétecteurs adjacents, une lame de la pluralité de lames est montée à pivotement entre lesdits premiers photodétecteurs dudit couple, et la ligne de premiers photodétecteurs 2a, 2b, 2c, 2d, est encadrée par deux lames 8a, 8e de la pluralité de lames. Comme illustré à la figure 1, on entend ici par « encadrée » le fait que la ligne de premiers photodétecteurs soit disposée entre deux lames 8a, 8e de la pluralité de lames. En ce sens, chaque premier photodétecteur 2b, 2c disposé entre les premiers photodétecteurs 2a, 2d placés en bout de ligne est adjacent à deux autres premiers photodétecteurs, et est séparé de ces deux autres premiers photodétecteurs par deux lames associées.

Pour une position angulaire des lames 8a, 8b, 8c, 8d, 8e par rapport aux premiers photodétecteurs 2a, 2b, 2c, 2d, seuls les rayons issus des zones surveillées d'une partie du champ solaire associée à la position de mesure principale du dispositif de mesure peuvent atteindre les premiers photodétecteurs 2a, 2b, 2c, 2d.

Préférentiellement, le cache 7 est configuré de telle sorte que toutes les lames 8a, 8b, 8c, 8d, 8e sont solidaires en mouvement et restent notamment toutes parallèles les unes par rapport aux autres quel que soit l'angle de pivotement desdites lames 8a, 8b, 8c, 8d, 8e par rapport à leurs axes de pivotement respectifs.

Le mouvement possible des lames 8a, 8b, 8c, 8d, 8e via les axes de pivotement A2, A3, A4, A5, A6 correspond à la mobilité du cache 7 décrite ci-dessus. Autrement dit, la mobilité du cache 7 par rapport aux premiers photodétecteurs est ici conférée par la possibilité de pivotement des lames 8a, 8b, 8c, 8d par rapport au support 6 intégrant les premiers photodétecteurs 2a, 2b, 2c, 2d.

Un déplacement de l'une des lames 8a, 8b, 8c, 8d, 8e provoque préférentiellement le déplacement de chacune des autres lames. Pour cela, le dispositif de mesure 1 peut comporter un moteur 9 et un système d'entraînement 10 agissant en synergie pour permettre le mouvement simultané de l'ensemble des lames 8a, 8b, 8c, 8d, 8e de la pluralité de lames. Le moteur 9 peut être monté au support 6 et accouplé à l'une des lames - ici la lame 8e - ensuite la lame 8e est reliée à chacune des autres lames par une tringle 10 qui permet de transmettre le mouvement de la lame 8e aux autres lames 8a, 8b, 8c, 8d. Cette tringle 10 est préférentiellement située au plus proche du support 6 pour éviter d'ombrer les premiers photodétecteurs 2a, 2b, 2c, 2d.

Les axes de pivotement A2, A3, A4, A5, A6 des lames 8a, 8b, 8c, 8d, 8e sont préférentiellement inclus dans le plan de mesure évoqué précédemment. Ceci permettant notamment que la distance entre une cellule (un premier photodétecteur) et une lame reste toujours la même.

Dans le cadre de la centrale solaire 100 décrite précédemment, le dispositif de mesure 1 va être autorisé à se déplacer le long du récepteur 102. En ce sens, une position de mesure principale donnée du dispositif de mesure 1 par rapport au récepteur 102 permet de définir la partie du champ solaire à surveiller et les lames, en fonction de leurs positions angulaires permettent de surveiller différentes zones de cette partie du champ solaire 101. Il est ainsi réalisé un découpage fin du champ solaire 101 permettant de localiser plus finement un éventuel problème. En effectuant un balayage angulaire avec les lames 8a, 8b, 8c, 8d, 8e tout en acquérant les signaux des premiers photodétecteurs 2a, 2b, 2c, 2d, il est possible de déterminer des flux, notamment relatifs, associés à l'ensemble des angles de vues sur toute la largeur du champ solaire 101. Ensuite, il est possible de dissocier la part issue de chacun des réflecteurs du champ solaire 101 qui correspond au final à des plages d'angles de vue fonction de la géométrie globale de la centrale solaire 100.

Autrement dit, on comprend que, notamment pour chaque position de mesure principale du dispositif de mesure 1 par rapport au récepteur 102, les lames 8a, 8b, 8c, 8d, 8e vont permettre de balayer la partie du champ solaire 101 de telle sorte que pour des positions différentes des lames 8a, 8b, 8c, 8d, 8e les premiers photodétecteurs 2a, 2b, 2c, 2d vont voir des rayons issus de zones différentes à surveiller correspondantes de la partie du champ solaire 100. En effectuant ce balayage angulaire des lames 8a, 8b, 8c, 8d, 8e par pivotement de ces dernières autour de leurs axes de pivotement respectifs, tout en acquérant le signal de sortie - aussi appelé flux relatif - des premiers photodétecteurs 2a, 2b, 2c, 2d, il est mesuré alors les flux issus de l'ensemble des angles de vues sur toute une largeur correspondante du récepteur 102 à ladite position de mesure principale.

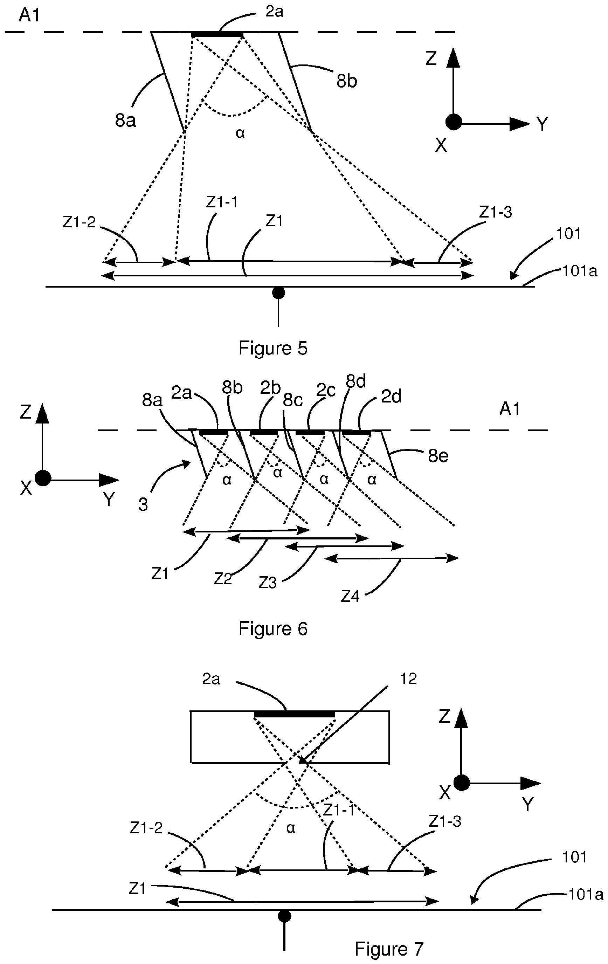

La figure 5 illustre le comportement de l'un des premiers photodétecteurs 2a associé à deux lames 8a, 8b. Un angle de vue α permet de définir une zone Z1 du champ solaire 101, et notamment d'un réflecteur 101a du champ solaire 101, à partir de laquelle les rayons solaires sont réfléchis en direction du premier photodétecteur 2a. Cet angle de vue α est notamment défini par la taille du premier photodétecteur 2a, les espacements entre les lames 8a et 8b avec le premier photodétecteur 2a, les dimensions des lames 8a, 8b et leurs positions angulaires. En particulier, cet angle de vue α est inclus dans un plan passant par l'axe d'alignement A1 décrit ci-avant et perpendiculaire au plan de mesure incluant les faces actives des premiers photodétecteurs 2a, 2b, 2c, 2d. La figure 6 illustre quant à elle le dispositif de mesure selon la figure 1. On en déduit que chacun des premiers photodétecteurs 2a, 2b, 2c, 2d en association avec les lames 8a, 8b, 8c, 8d, 8e présente un angle de vue α, et que pour une position angulaire donnée de toutes les lames, cet angle de vue α est identique à tous les premiers photodétecteurs 2a, 2b, 2c, 2d. Les doubles flèches permettent de visualiser les zones Z1, Z2, Z3, et Z4 que le dispositif de mesure 1 peut surveiller pour une configuration donnée du système 3 par rapport aux premiers photodétecteurs 2a, 2b, 2c, 2d. On comprend alors que le changement de configuration du système 3 consiste alors à modifier la position angulaire des lames 8a, 8b, 8c, 8d, 8e d'où il résulte que les zones à surveiller sont modifiées. Pour une position donnée des lames 8a, 8b, 8c, 8d, 8e, les zones surveillées par les premiers photodétecteurs 2a, 2b, 2c, 2d peuvent partiellement se chevaucher. De manière similaire, lors d'un changement de position des lames 8a, 8b, 8c, 8d, 8e, les nouvelles zones surveillées peuvent chevaucher les anciennes zones surveillées ou pas du tout.

Par ailleurs, la dimension des lames 8a, 8b, 8c, 8d, 8e selon leurs axes de pivotement A2, A3, A4, A5, A6 est telle que pour chaque premier photodétecteur 2a, 2b, 2c, 2d, tous les rayons non issus de la zone à surveiller correspondante, et quelle que soit l'incidence longitudinale de ces rayons, sont ombrés. Autrement dit, les dimensions des lames 8a, 8b, 8c, 8d, 8e associées à leurs positions angulaires par rapport au support 6 permettent de délimiter pour chaque premier photodétecteur 2a, 2b, 2c, 2d les dimensions d'une zone à surveiller selon l'axe longitudinal des réflecteurs du champ solaire 101 et transversalement à cet axe longitudinal. L'incidence longitudinale des rayons impactant le dispositif de mesure n'étant pas la même pour tous les rayons issus du champ solaire, la position longitudinale des zones surveillées n'est pas la même et évolue avec la position angulaire des lames.

Les lames 8a, 8b, 8c, 8d, 8e étant interposées entre le champ solaire 101 et les premiers photodétecteurs 2a, 2b, 2c, 2d, il est préférable qu'elles soient autant absorbantes que possible pour éviter tout réfléchissement de rayons. Pour cela, lesdites lames 8a, 8b, 8c, 8d, 8e peuvent être recouvertes d'une peinture thermique noire, ou d'une couche absorbante.

Les lames 8a, 8b, 8c, 8d évoquées précédemment présentent aussi l'avantage d'intercepter une grande part de la puissance solaire réfléchie par le champ solaire 101. En ce sens, les premiers photodétecteurs 2a, 2b, 2c, 2d ne sont soumis qu'à une faible partie du flux incident au récepteur 102, et sont donc peu contraints thermiquement.

Selon une deuxième réalisation notamment illustrée en figure 2, le cache 7 comporte un organe 11, notamment une plaque, présentant une fente 12 allongée dans une direction sensiblement orthogonale à l'axe d'alignement A1 des premiers photodétecteurs 2a, 2b, 2c, 2d. La fente 12 s'étend notamment longitudinalement selon l'axe A_{fente} sensiblement orthogonal à l'axe A1. En particulier, les seuls rayons issus du champ solaire 101 et vus par chacun des premiers photodétecteurs 2a, 2b, 2c, 2d quelle que soit la configuration du système 3 (et donc la position de la fente 12) par rapport aux premiers photodétecteurs 2a, 2b, 2c, 2d passent par cette fente 12. En particulier, le passage de la première configuration à la deuxième configuration du système 3 provoque le déplacement de la fente 12 selon l'axe d'alignement A1 des premiers photodétecteurs 2a, 2b, 2c, 2d, notamment de telle sorte que, pour toute position de la fente 12 par rapport aux premiers photodétecteurs 2a, 2b, 2c, 2d, cette dernière présente l'axe d'allongement A_{fente} sensiblement orthogonal à l'axe d'alignement A1. La fente 12 est donc préférentiellement rectiligne de sorte à s'étendre sur sa longueur selon l'axe d'allongement et comporte une largeur constante. L'allongement de la fente 12 est orienté pour tenir compte de l'incidence longitudinale des rayons réfléchis par les réflecteurs du champ solaire 101 qui vont suivre la course du soleil S au cours de la journée pour réfléchir ses rayons en direction du récepteur 102.

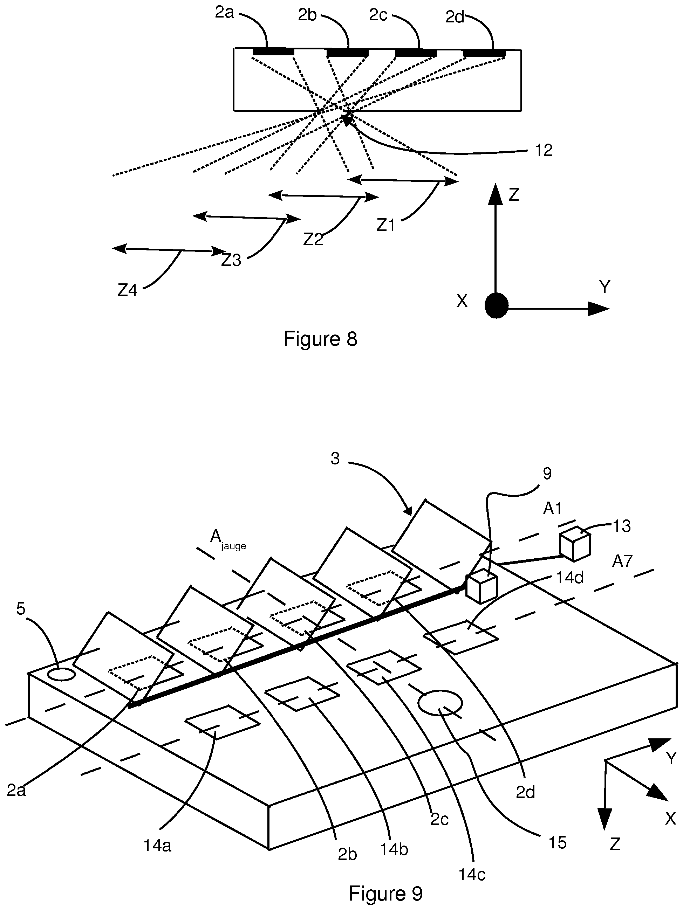

La figure 7 illustre le comportement de l'un des premiers photodétecteurs 2a associé à la fente 12. La fente 12 défini un angle de vue α du premier photodétecteur 2a permettant de surveiller une zone Z1 du champ solaire 101, ou d'un réflecteur 101a du champ solaire 101. La figure 8 illustre quant à elle le dispositif de mesure selon la figure 2. On en déduit que chacun des premiers photodétecteurs 2a, 2b, 2c, 2d en association avec la fente 12 présente un angle de vue qui lui est propre, et que pour une position donnée de la fente 12 les angles de vue des différents premiers photodétecteurs 2a, 2b, 2c, 2d peuvent au moins en partie être différents. Les doubles flèches permettent de visualiser les zones Z1, Z2, Z3, et Z4 que le dispositif de mesure 1 peut surveiller pour une configuration donnée du système 3 par rapport aux premiers photodétecteurs 2a, 2b, 2c, 2d. On comprend alors que le changement de configuration du système 3 consiste alors à modifier la position de la fente 12 d'où il résulte que les zones à surveiller sont modifiées. On comprend alors que la position de la fente par rapport aux premiers photodétecteurs est modifiée lors du changement de configuration du système. Pour une position donnée de la fente 12, les zones surveillées par les premiers photodétecteurs 2a, 2b, 2c, 2d peuvent partiellement se chevaucher ou pas du tout. De manière similaire, lors d'un changement de position de la fente 12, les nouvelles zones surveillées peuvent chevaucher les anciennes zones surveillées ou non. Ainsi, la position de la fente 12 et l'orientation de son allongement permettent pour chaque premier photodétecteur 2a, 2b, 2c, 2d de déterminer, dans la configuration d'utilisation du dispositif de mesure 1 de quelle zone du champ solaire sont issus les rayons incidents audit premier photodétecteur 2a, 2b, 2c, 2d. Par ailleurs, en déplaçant cette fente 12, il est possible de déterminer pour chaque premier photodétecteur 2a, 2b, 2c, 2d un flux relatif incident total, une contribution de chaque direction et donc une contribution de chaque réflecteur.

Le déplacement de la fente 12 peut être mis en oeuvre par le déplacement de la plaque 11 associée, par exemple en utilisant des éléments mécaniques adaptés comme un moteur 9 accouplé à une crémaillère 16 formée sur un capot 17 portant la plaque 11.

La plaque 11 peut être toujours parallèle au plan de mesure des premiers photodétecteurs 2a, 2b, 2c, 2d.

De préférence, pour limiter réchauffement du dispositif de mesure 1, une face de la plaque 11 dans laquelle est ménagée la fente 12 et destinée à être orientée vers le champ solaire 101 en configuration d'utilisation du dispositif de mesure 1 est réfléchissante des rayons issus du champ solaire 101. Par exemple, cette face peut être un miroir ou être recouverte d'une peinture thermique blanche.

L'utilisation du dispositif de mesure 1, et plus particulièrement de l'une ou de l'autre des première et deuxième réalisations, permet notamment de réaliser une cartographie plus fine du champ solaire 101. Cette cartographie peut alors être utilisée pour localiser un problème sur une zone restreinte au sein du champ solaire 101 en vue de le résoudre rapidement. Autrement dit, de manière générale, le dispositif de mesure 1 peut comprendre un module d'analyse 13 relié à chacun des premiers photodétecteurs 2a, 2b, 2c, 2d et configuré de sorte à traiter les données issues des premiers photodétecteurs 2a, 2b, 2c, 2d pour établir une cartographie du flux solaire réfléchi par le champ solaire 101 en direction du récepteur 102. Le module d'analyse 13 peut aussi récupérer la température de chacun des premiers photodétecteurs 2a, 2b, 2c, 2d pour utiliser ces valeurs dans le but d'établir la cartographie.

Sur la figure 5, on distingue une zone centrale Z1-1 pour laquelle l'ensemble des rayons dirigés vers le premier photodétecteur 2a par le champ solaire 101 ne sont pas interceptés par les lames 8a, 8b. Par ailleurs, on comprend aussi de cette figure 5 que les rayons dirigés vers le premier photodétecteur 2a et issus des deux zones Z1-2 et Z1-3 situés de part et d'autre de la zone centrale Z1-1 sont en partie interceptés par les lames 8a, 8b. Il en résulte donc que pour une configuration du système 3 les rayons effectivement mesurés par le premier photodétecteur 2a ne correspondent pas à l'ensemble des rayons réellement réfléchis par la zone surveillée en direction du premier photodétecteur 2a. Ce principe s'applique aussi à la deuxième réalisation comme le montre la figure 7, où la zone Z1 comporte la zone centrale Z1-1 et les deux zones Z1-2 et Z1-3 situées de part et d'autre de la zone centrale Z1-1 dont une partie des rayons sont interceptés par la fente 12. En ce sens, on en déduit qu'il existe un facteur correctif à appliquer si l'on veut obtenir les valeurs réelles de la contribution d'une zone surveillée du champ solaire 101 au flux lumineux perçu par un premier photodétecteur donné, et donc à l'apport de calories au sein du récepteur 102.

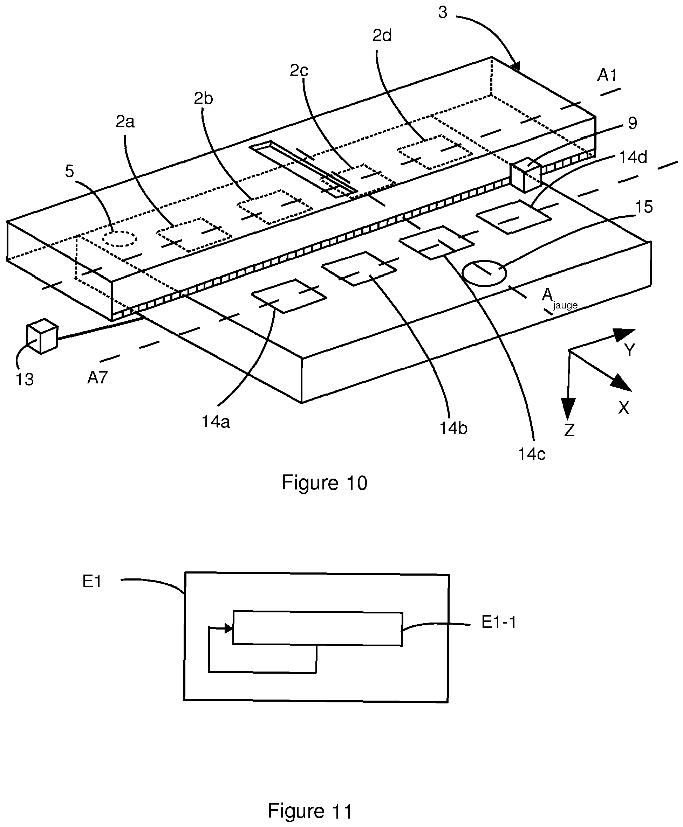

Il existe donc une problématique relative à l'élaboration ou à la quantification de ce facteur correctif pour établir la différence entre le flux, notamment relatif, effectivement perçu par un des premiers photodétecteurs et le flux, notamment relatif, réel qu'il aurait du recevoir. Comme illustré en figures 9 et 10, ce facteur correctif peut être déterminé grâce à l'utilisation de deuxièmes photodétecteurs 14a, 14b, 14c, 14d du dispositif de mesure 1, aussi appelés photodétecteurs étalons, qui ne présentent pas l'ombrage du système 3 modifiant la perception des premiers photodétecteurs 2a, 2b, 2c, 2d. En l'occurrence, ces deuxièmes photodétecteurs reçoivent un flux provenant potentiellement de l'ensemble des réflecteurs de champ solaire. Pour cela, le dispositif de mesure peut comporter, pour chaque premier photodétecteur 2a, 2b, 2c, 2d, un deuxième photodétecteur 14a, 14b, 14c, 14d situé à proximité dudit premier photodétecteur 2a, 2b, 2c, 2d correspondant. En particulier, le dispositif de mesure 1 comporte autant de premiers photodétecteurs 2a, 2b, 2c, 2d que de deuxièmes photodétecteurs 14a, 14b, 14c, 14d, les deuxièmes photodétecteurs 14a, 14b, 14c, 14d étant alignés selon un axe d'alignement A7 parallèle à l'axe d'alignement A1 des premiers photodétecteurs 2a, 2b, 2c, 2d. Bien entendu, on comprend que la quantité de rayons reçus par les deuxièmes photodétecteurs 14a, 14b, 14c, 14d selon l'axe d'alignement n'est pas modifié par ledit système 3 et ce quelle que soit la configuration du système 3, c'est à dire le cas échéant la position du cache 7. Ainsi, le système 3 n'intercepte aucun des rayons issus du champ solaire 101 en direction des deuxièmes photodétecteurs. Autrement dit, le système 3 est configuré de sorte à n'intercepter aucun des rayons issus du champ solaire en direction des deuxièmes photodétecteurs : le système 3 n'ombre pas les deuxièmes photodétecteurs. Le rôle des deuxièmes photodétecteurs 14a, 14b, 14c, 14d est de mesurer ou de déterminer les flux, notamment relatifs, lumineux issus du champ solaire 101 sans la perturbation induite par le système 3 dans le but d'établir des facteurs correctifs aux mesures réalisées par les premiers photodétecteurs 2a, 2b, 2c, 2d, notamment pour une position du cache donnée et notamment en association à une position de mesure principale du dispositif de mesure 1 par rapport au récepteur 102 dans la configuration d'utilisation. Dans la présente description, il a été décrit l'utilisation de plusieurs deuxièmes photodétecteurs mais on notera qu'un seul deuxième photodétecteur agencé de telle sorte que le système 3 n'intercepte aucun des rayons issus du champ solaire en direction dudit deuxième photodétecteur peut suffire, dans ce cas, le facteur correctif élaboré à partir du deuxième photodétecteur peut être le même pour tous les premiers photodétecteurs. Pour élaborer ce facteur correctif à parti d'un seul deuxième photodétecteur il est possible de comparer la mesure du deuxième photodétecteur - qui voit alors l'ensemble du champ solaire à la somme des mesures d'un premier photodétecteur associé après balayage de l'ensemble du champ solaire pour une position de mesure donnée. En fait, dans le cas de l'utilisation d'un seul deuxième photodétecteur, on suppose que la part de rayons interceptée par le système 3, notamment les lames, est la même pour chaque premier photodétecteur. En cas d'utilisation de plusieurs deuxièmes photodétecteurs, il est possible d'obtenir des informations supplémentaires et de notamment vérifier que la part des rayons interceptés est la même pour chacun des premiers photodétecteurs. Par ailleurs, en cas d'une pluralité de deuxièmes photodétecteurs, il est possible de donner un profil de flux relatif correspondant directement à l'ensemble du champ solaire, ce qui est complémentaire. Bien entendu, le dispositif de mesure peut aussi fonctionner sans deuxième(s) photodétecteur(s).

On constate que dans la configuration d'utilisation, les deuxièmes photodétecteurs 14a, 14b, 14c, 14d sont décalés par rapport aux premiers détecteurs 2a, 2b, 2c, 2d selon l'axe du récepteur A_{Récepteur}. Ainsi, de manière préférée, pour évaluer le facteur correctif de chacun des premiers photodétecteurs 2a, 2b, 2c, 2d pour une position principale de mesure donnée du dispositif de mesure 1, lorsque le dispositif de mesure 1 se déplace de sa position de mesure principale donnée vers une nouvelle position par rapport au récepteur 102, son déplacement est au moins temporairement stoppé lorsque les deuxièmes photorécepteurs 14a, 14b, 14c, 14d atteignent respectivement des positions précédemment occupées par les premiers photodétecteurs 2a, 2b, 2c, 2d dans la position de mesure principale donnée évoquée précédemment afin que lesdits deuxièmes photodétecteurs 14a, 14b, 14c, 14d puissent percevoir des flux similaires à ceux ayant précédemment atteint les premiers photodétecteurs 2a, 2b, 2c, 2d en vue de déterminer les facteurs correctifs.

En particulier, chaque deuxième photodétecteur est aligné avec un premier photodétecteur correspondant selon un axe sensiblement orthogonal, notamment perpendiculaire à l'axe d'alignement A1.

L'utilisation des premiers photodétecteurs 2a, 2b, 2c, 2d, et le cas échéant des deuxièmes photodétecteurs 14a, 14b, 14c, 14d, permet de réaliser la cartographie des rayons issus du champ solaire en utilisant les flux relatifs corrigés ou non décrit précédemment
Les deuxièmes photodétecteurs peuvent aussi être maintenus en température et comporter chacun un thermocouple pour mesurer leur température.

Les deuxièmes photodétecteurs peuvent être reliés au module d'analyse 13 de telle sorte que leurs mesures soient exploitées par le module d'analyse 13 pour corriger les flux associés aux premiers photodétecteurs.

Pour des mesures cohérentes, les premiers et deuxièmes photodétecteurs sont préférentiellement identiques.

Selon une mise en oeuvre, les premiers et/ou deuxième(s) photodétecteur(s) sont des cellules photovoltaïques, notamment triples jonctions captant un spectre s'étendant par exemple de 300nm à 1700nm, et fonctionnant en particulier jusqu'à des densités de flux de l'ordre de 1 MW/m². Un thermocouple peut être installé sur chaque cellule photovoltaïque et mesure sa température. La température des cellules photovoltaïques peut être maintenu constante par un circuit de refroidissement actif afin que le coefficient de proportionnalité décrit ci-après soit le même pour toutes les cellules photovoltaïques. La réponse des cellules photovoltaïques est caractérisée en usine sous un spectre AM1.5D normé, qui correspond à la lumière arrivant sur terre après avoir traversé 1,5 fois l'épaisseur de l'atmosphère, pour confirmer que leur courant de court-circuit soit identique. Les dimensions des cellules photovoltaïques sont celles d'un carré d'un centimètre de côté. Chaque cellule photovoltaïque est avantageusement brasée sur une plaquette en cuivre de 3,5 cm par 3,5 cm. L'intérêt d'avoir recours à ce type de cellules photovoltaïques est dans leur prix, bien moins onéreux qu'une jauge de flux à un effet thermique. Cependant, le signal délivré est relatif car fonction du spectre et de la température. Selon cette mise en oeuvre, il ne peut être déterminé dans un premier temps qu'une cartographie relative en utilisant les flux relatifs.

Pour obtenir une cartographie absolue, il est possible d'utiliser le fait que le flux solaire incident à ce type de cellule photovoltaïque est proportionnel au courant de court-circuit délivré par la cellule photovoltaïque. Le coefficient de proportionnalité est fonction néanmoins du spectre reçu et de la température de la cellule, ceci implique qu'il est nécessaire de déterminer ce coefficient de proportionnalité en phase amont en caractérisant la réponse des cellules avec un spectre connu, puis lors de la mesure, il faut mesurer le spectre incident pour connaître le coefficient de proportionnalité correspondant, déterminé en phase amont. Ceci est bien entendu réalisable, mais compliqué à mettre en oeuvre. En ce sens, pour s'affranchir de ces deux étapes, il est possible d'utiliser une jauge de flux à un effet thermique pour convertir la réponse relative des cellules en kW/m², notamment pour une température donnée des cellules photovoltaïques. L'utilisation de la jauge de flux dans le cadre du présent dispositif de mesure peut se faire en appliquant les enseignements du document FR2981737. Plus particulièrement, lorsque les cellules photovoltaïques formant les premiers photodétecteurs 2a, 2b, 2c, 2d sont positionnées à une certaine position par rapport au récepteur 102, on acquiert le signal issu de l'ensemble des cellules photovoltaïques formant les premiers photodétecteurs 2a, 2b, 2c, 2d tout en effectuant un balayage angulaire des lames ou un balayage via la fente 12 pour obtenir un profil de flux global (issu de l'ensemble du champ solaire) sur une échelle relative. La jauge de flux utilisant un effet thermique est positionnée dans le prolongement d'une cellule photovoltaïque de telle sorte que, lorsque le dispositif de mesure 1 est déplacé d'un pas correspondant à la distance séparant la jauge de flux de la cellule photovoltaïque associée, ladite jauge de flux perçoit le même flux perçu précédemment par ladite cellule photovoltaïque associée lors de l'acquisition du profil de flux global. La jauge de flux est agencée de telle à ne pas être ombrée par le système 3. Ainsi, on obtient aisément un coefficient de proportionnalité qui est le rapport de la réponse de la jauge de flux sur la réponse de la cellule photovoltaïque associée. Ce coefficient peut ensuite appliqué aux réponses de l'ensemble des cellules photovoltaïque associées pour une position de mesure principale correspondante en vue de déterminer un flux absolu associé desdits premiers photodétecteurs 2a, 2b, 2c, 2d.

Le flux absolu permet par exemple de connaître la puissance solaire perçue, par exemple en watts par mètre carré, par le dispositif de mesure 1 à chaque position de mesure principale et pour chaque configuration du système, de telle sorte à en déduire la puissance solaire perçue par l'ensemble du récepteur 102 et à caractériser le champ solaire, et plus particulièrement chacun des réflecteurs du champ solaire 101.

Les figures 1, 2, 9 et 10 illustrent justement le dispositif de mesure comprenant une jauge de flux à effet thermique 15 associée de l'un des premiers photodétecteurs 2c, notamment aligné avec la jauge de flux à effet thermique 15 selon un axe A_{jauge} orthogonal, et notamment perpendiculaire, à l'axe d'alignement A1 desdits premiers photodétecteurs 2a, 2b, 2c, 2d.

La jauge de flux à effet thermique est préférentiellement une jauge de type Gardon. Ce type de jauge est constitué d'un bloc refroidi cylindrique de 2.5 cm de diamètre en cuivre sur lequel repose une fine couche de Constantan. Lorsque cette dernière est irradiée, la chaleur reçue est évacuée via la partie cylindrique en cuivre vers un circuit d'eau de refroidissement. Ainsi, le flux incident est déterminé grâce à une mesure de température différentielle entre le centre de la surface irradiée et sa périphérie.

La jauge 15 peut être reliée au module d'analyse 13 qui peut exploiter les données issues de ladite jauge pour déterminer des valeurs de flux absolues.

Bien entendu, avant de déterminer le flux absolu associé à chacun des premiers photodétecteurs 2a, 2b, 2c, 2d, le flux relatif correspondant est préférentiellement corrigé avec le facteur correctif. En ce sens, un dispositif de mesure 1 selon un mode préféré intègre le ou les deuxièmes photodétecteurs 14a, 14b, 14c, 14d et la jauge de flux à effet thermique 15.

Selon une mise en oeuvre particulière, pour effectuer des mesures à une position de mesure principale donnée, le dispositif de mesure se déplace de manière à se positionner à cette position de mesure principale. Après un balayage angulaire des lames - ou un balayage de la fente 12, on déduit le profil de flux correspondant à chaque réflecteur sur une échelle relative en utilisant les mesures issues des premiers photodétecteurs 2a, 2b, 2c, 2d. Les profils obtenus pour chaque réflecteur sont sommés pour obtenir un profil global. Le dispositif de mesure peut alors se déplacer de manière à ce que les deuxièmes photodétecteurs 14a, 14b, 14c, 14d soient positionnés aux mêmes positions que les premiers photodétecteurs 2a, 2b, 2c, 2d lorsque le dispositif de mesure était dans sa position de mesure principale, et on acquiert les réponses des deuxièmes photodétecteurs 14a, 14b, 14c, 14d. On opère de même pour la jauge de flux à effet thermique 15. La valeur relative sur le profil de flux global, correspondant à un des premiers photodétecteurs à la même position qu'un deuxième photodétecteur correspondant et en association avec une position associée de la jauge de flux à effet thermique, peut être comparée à la valeur de la mesure effectuée par ledit second photodétecteur pour donner un coefficient de proportionnalité entre ces deux valeurs. Ce coefficient de proportionnalité peut être appliqué au profil de flux global et également au profil de flux issu d'un réflecteur uniquement. Le signal relatif est ensuite convertit en kW/m², notamment en faisant correspondre la mesure du second photodétecteur avec la jauge de flux thermique.

On comprend de tout ce qui a été dit ci-dessus que l'invention peut aussi être relative à un procédé d'utilisation du dispositif de mesure 1 au sein d'une centrale solaire 100 telle que décrite précédemment.

Plus généralement, comme illustré en figure 11, le procédé d'utilisation du dispositif de mesure 1 tel que décrit dans une centrale solaire 100 telle que décrite peut comporter une étape de placement E1 du dispositif de mesure 1 à une pluralité de positions de mesure principale par rapport au récepteur 102, et, une étape de mesure E1-1 mise en oeuvre par les premiers photodétecteurs 2a, 2b, 2c, 2d selon au moins la première configuration du système et la deuxième configuration du système 3. Bien entendu, lorsque le système 3 est capable d'adopter plus de deux configurations, l'étape de mesure E1-1 est préférentiellement mise en oeuvre pour chacune de ces configurations. Notamment, l'étape de mesure E1-1 est mise en oeuvre pour chaque position de mesure principale. Selon une réalisation, l'étape de placement E1 peut être telle que le déplacement du dispositif de mesure est continu avec une vitesse d'acquisition et une vitesse de déplacement permettant d'acquérir les mesures où on le souhaite, dans ce cas l'étape de mesure peut être mise en oeuvre une pluralité de fois au cours du déplacement du dispositif de mesure et chaque étape de mesure peut être réalisée à partir d'une ou plusieurs positions de mesure principale proches et successives.

Préférentiellement, l'étape de placement E1 du dispositif de mesure 1 consiste à déplacer le dispositif de mesure 1 le long du récepteur 102 de telle sorte qu'en toute position de mesure principale, l'axe d'alignement A1 des premiers photodétecteurs 2a, 2b, 2c, 2d est sensiblement orthogonal à l'axe longitudinal A_{Récepteur} du récepteur 102.

Dans chaque position de mesure, il résulte que les premiers photodétecteurs 2a, 2b, 2c, 2d sont chacun disposés dans une position d'acquisition, cette position d'acquisition est définie par rapport au récepteur 102.

Comme on l'a évoqué précédemment, les flux mesurés/déterminés par, ou à partir de, chacun des premiers photodétecteurs 2a, 2b, 2c, 2d peuvent être des flux relatifs qui peuvent être corrigés pour tenir compte de l'ombrage et/ou qui peuvent être transformés grâce à l'utilisation d'un flux de référence pour en déterminer des flux absolus permettant par exemple de remonter à une puissance solaire perçue par les premiers photodétecteurs 2a, 2b, 2c, 2d et donc le récepteur 102.

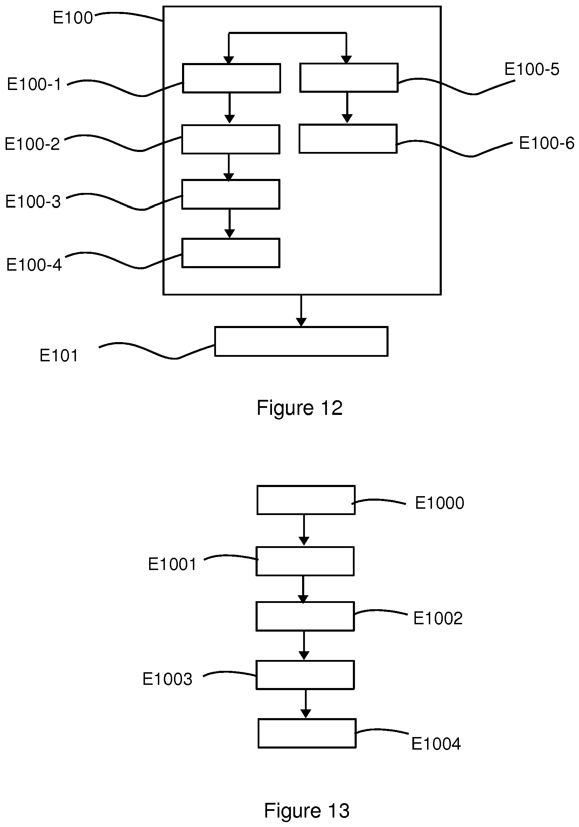

En ce sens, dans un premier cas où l'on souhaite tenir compte de l'ombrage provoqué par le système 3, on se retrouve dans la situation suivante : le dispositif de mesure 1 comporte des deuxièmes photodétecteurs 14a, 14b, 14c, 14d (notamment autant de deuxièmes photodétecteurs que de premiers photodétecteurs comme évoqué précédemment) alignés selon un axe A7 sensiblement parallèle à l'axe d'alignement A1 des premiers photodétecteurs 2a, 2b, 2c, 2d et agencés de telle sorte que le système 3 n'intercepte pas les rayons issus du champ solaire 101 et orientés vers les deuxièmes photodétecteurs 14a, 14b, 14c, 14d. Dans ce premier cas, le procédé comporte au moins un ensemble d'étapes E100 (illustré en figure 12) mis en oeuvre pour chaque premier photodétecteur 2a, 2b, 2c, 2d, ledit ensemble d'étapes E100 comprenant: un placement E100-1 dudit premier photodétecteur 2a, 2b ,2c, 2d à une position d'acquisition définie comme la position occupée par ledit premier photodétecteur 2a, 2b ,2c, 2d dans une des positions de mesure principale du dispositif de mesure 1, puis une détermination E100-2 à partir dudit premier photodétecteur placé dans ladite position d'acquisition de flux relatifs issus du champ solaire 101 pour au moins les première et deuxième configurations du système 3 (il s'agit ici de mettre en oeuvre une étape de mesure selon l'étape E1-1 décrite ci-avant) ; et un placement E100-3 d'un des deuxièmes photodétecteurs 14a, 14b, 14c, 14d associé audit premier photodétecteur 2a, 2b, 2c, 2d à ladite position d'acquisition d'où il résulte que le dispositif de mesure 1 occupe une position de mesure secondaire différente de ladite une des positions de mesure principale, puis une détermination E100-4 à partir dudit un des deuxièmes photodétecteurs 14a, 14b, 14c, 14d placé dans la position d'acquisition d'un flux étalon. Enfin, le procédé comporte une étape d'utilisation E101 des flux étalons déterminés et des flux relatifs déterminés pour élaborer une cartographie des flux perçus par le récepteur 102 et issus du champ solaire 101. On comprend ici que lorsqu'une mesure/détermination d'un flux relatif est réalisée par un premier photodétecteur 2a, 2b, 2c, 2d à une position d'acquisition, il est aussi réalisé une mesure, par un deuxième photodétecteur 14a, 14b, 14c, 14d à cette même position d'acquisition pour corriger les flux relatifs déterminés par le premier photodétecteur 2a, 2b, 2c, 2d correspondant pour les première et deuxième configurations en tenant compte de l'ombrage induit par le système 3. La figure 12 montre que les étapes E100-1 et E100-2 sont mises en oeuvre avant les étapes E100-3 et E100-4, il s'agit d'un exemple car bien entendu l'inverse est aussi possible. Au cours de l'étape E101, les flux relatifs déterminés sont préférentiellement chacun corrigés par l'utilisation d'un flux étalon associé. Pour réaliser cette correction, pour un premier photodétecteur, il faut sommer les valeurs correspondant à l'ensemble du champ solaire pour une position de mesure principale donnée, cette correction faite, il est possible de revenir à des flux correspondant à un réflecteur en particulier.

Préférentiellement, dans ce premier cas, l'ensemble d'étapes E100 est mis en oeuvre en association avec chaque position de mesure principale. Ceci permet à l'étape d'utilisation E101 de cartographier les flux, notamment relatifs, perçus par l'ensemble du récepteur 102 selon sa longueur.

Dans une réalisation de ce premier cas, on va chercher en outre à tenir compte des conditions de fonctionnement de la centrale solaire 100, notamment pour remonter à des valeurs de flux absolus. Dans cette réalisation, la situation est la suivante : les premiers photodétecteurs 2a, 2b, 2c, 2d (et notamment les deuxièmes photodétecteurs) sont chacun formé par une cellule photovoltaïque notamment telle que décrite précédemment ; le dispositif de mesure 1 comporte une jauge de flux à effet thermique 15 (notamment telle que décrite précédemment) associée à un photodétecteur de référence 2c choisi parmi les premiers photodétecteurs. Ici l'ensemble d'étapes E100 associé audit photodétecteur de référence 2c comporte une étape de placement E100-5 de la jauge de flux à effet thermique 15 à ladite position d'acquisition d'où il résulte que le dispositif de mesure 1 occupe une position de mesure additionnelle différente de ladite une des positions de mesure principale et de ladite position de mesure secondaire correspondantes, puis une étape de détermination E100-6 à partir de ladite jauge de flux à effet thermique 15 d'un flux de référence. Enfin, l'étape d'utilisation E101 comporte en outre l'utilisation de chaque flux de référence déterminé. L'utilisation de chaque flux de référence déterminé permet notamment de calculer une puissance solaire perçue pour chaque position d'acquisition de chaque premier photodétecteur associée à une position de mesure principale, et cela pour chaque configuration du système 3 à ladite position de mesure principale correspondante. Il est ensuite donc possible d'associer grâce aux différentes configurations du système quelle puissance solaire provient de quelle zone surveillée du champ solaire.

Dans un deuxième cas, il est possible de négliger les rayons interceptés par le système 3 et issus des zones à surveiller. En ce sens, les deuxièmes photodétecteurs 14a, 14b, 14c, 14d ne sont pas nécessaires, et la situation peut être la suivante : les premiers photodétecteurs 2a, 2b, 2c, 2d sont chacun formé par une cellule photovoltaïque, notamment telle que décrite précédemment ; le dispositif de mesure 1 comporte une jauge de flux à effet thermique 15 (notamment telle que décrite précédemment) associée à un photodétecteur de référence 2c choisi parmi les premiers photodétecteurs. Dans ce deuxième cas, le procédé comporte, en association avec chaque position de mesure principale, les étapes suivantes (figure 13) : une étape de placement E1000 desdits premiers photodétecteurs 2a, 2b, 2c, 2d à des positions d'acquisition définies comme les positions occupées par lesdits premiers photodétecteurs 2a, 2b, 2c, 2d dans ladite position de mesure principale du dispositif de mesure 1 ; une étape de détermination E1001, pour chacun des premiers photodétecteurs 2a, 2b, 2c, 2d placé dans sa position d'acquisition, de flux relatifs pour au moins les première et deuxième configurations du système 3 (ceci consistant notamment à la mise en oeuvre d'une étape de mesure E1-1) ; une étape de placement E1002 de la jauge de flux à thermique 15 à ladite position d'acquisition du photodétecteur de référence 2c d'où il résulte que le dispositif de mesure 1 occupe une position distincte de ladite position de mesure principale, et une étape de détermination d'un flux de référence à partir de ladite jauge de flux à effet thermique 15 placée à ladite position d'acquisition. Dans ce deuxième cas, le procédé comporte une étape d'utilisation E1004 des flux de référence déterminés et des flux relatifs déterminés pour élaborer une cartographie des flux perçus par le récepteur et issus du champ solaire sur une échelle absolue. L'utilisation de chaque flux de référence permet notamment de calculer une puissance solaire perçue pour chaque position d'acquisition de chaque premier photodétecteur 2a, 2b, 2c, 2d et cela pour chaque configuration du système 3. Il est ensuite donc possible d'associer grâce aux différentes configurations du système 3 quelle puissance solaire provient de quelle zone surveillée du champ solaire 101.

Les premier et deuxième cas décrits ci-dessus sont optimisés dans le sens où les corrections des flux relatifs et/ou l'utilisation des flux de référence se font pour chacune des positions d'acquisition en plaçant les capteurs adaptés successivement dans chacune de ces positions d'acquisition. Selon une mise en oeuvre moins précise mais plus rapide, il est possible de considérer que le ou les deuxièmes photodétecteurs 14a, 14b, 14c, 14d et la jauge de flux à effet thermique 15 sont assez proches des premiers photodétecteurs 2a, 2b, 2c, 2d correspondant pour percevoir sensiblement la même puissance solaire. Dans ce cas, la situation peut être la suivante : le dispositif de mesure 1 comporte au moins un deuxième photodétecteur (lorsque le dispositif de mesure comporte des deuxièmes photodétecteurs 14a, 14b, 14c, 14d, ils sont alignés selon un axe A7 sensiblement parallèle à l'axe A1 d'alignement des premiers photodétecteurs 2a, 2b, 2c, 2d) et agencé de telle sorte que le système 3 n'intercepte pas les rayons issus du champ solaire 101 et orientés vers chaque deuxième photodétecteur 14a, 14b, 14C, 14d ; et/ou les premiers photodétecteurs 2a, 2b, 2c, 2d (et notamment chaque deuxième photodétecteur) sont chacun formé par une cellule photovoltaïque notamment telle que décrite précédemment ; le dispositif de mesure 1 comporte une jauge de flux à effet thermique 15 (notamment telle que décrite précédemment) associée à un photodétecteur de référence 2c choisi parmi les premiers photodétecteurs. Dans cette mise en oeuvre, chaque étape de mesure E1-1 consiste à déterminer des flux relatifs par chacun des premiers photodétecteurs 2a, 2b, 2c, 2d et pour chaque configuration du système 3 à ladite position de mesure principale correspondante, le cas échéant un flux étalon par chaque deuxième photodétecteur 14a, 14b, 14c, 14d à ladite position de mesure principale correspondante, et le cas échéant un flux de référence par ladite jauge de flux à effet thermique 15 à ladite position de mesure principale correspondante. Enfin, le procédé comporte une étape d'utilisation de chaque flux étalon déterminé, des flux relatifs déterminés et/ou de chaque flux de référence déterminé pour élaborer une cartographie des flux perçus par le récepteur 102 et issus du champ solaire 101, cette cartographie permettant, le cas échéant de représenter les flux relatifs, les flux relatifs corrigés et/ou les flux absolus perçus par le récepteur 102.

Selon une réalisation, le procédé d'utilisation permet d'établir un profil pour chacun des réflecteurs en utilisant les informations issus du dispositif de mesure 1. Dans certains cas, une ou plusieurs zones surveillées peuvent être formées au niveau de deux réflecteurs adjacents, et il n'est pas possible dissocier la contribution de chaque réflecteur, de telles zones surveillées sont appelées zones d'incertitudes. Ces zones d'incertitudes étant pré-déterminables théoriquement, on ne tient pas compte des mesures faites par les premiers détecteurs et associées à ces zones d'incertitudes. Le profil relatif de chaque réflecteur peut être obtenu en sommant les flux relatifs correspondants aux zones surveillées comprenant exclusivement ce réflecteur. Le profil relatif global du champ solaire est obtenu en sommant l'ensemble des profils relatifs des réflecteurs du champ solaire. Ce profil global obtenu est donc altéré dans une certaine mesure car il contient plusieurs fois certaines zones, d'autres zones (les zones d'incertitudes) sont supprimées, et le système peut générer un effet d'ombrage atténuant les mesures. Pour ce dernier point, la confrontation avec les deuxièmes photodétecteurs non ombrés permet de corriger le flux relatif.

Dans le cas du procédé, les déterminations de flux à partir des premiers photodétecteurs et des deuxièmes photodétecteurs se font alors qu'ils sont maintenus à une température de référence. Le cas échéant, les étapes d'utilisations décrites tiennent compte de cette température de référence. Alternativement, les températures des premiers photodétecteurs et des deuxièmes photodétecteurs sont mesurées et sont prises en compte par l'étape d'utilisation pour élaborer la cartographie correspondante.

Les réalisations du procédé décrites ci-avant et utilisant les deuxièmes photodétecteurs peuvent aussi être mises en oeuvre grâce à l'utilisation d'un seul deuxième photodétecteur dont une mesure de flux étalon peut être utilisée pour corriger l'ensemble des flux relatifs déterminés pour une position de mesure principale donnée. En ce sens, le dispositif de mesure 1 peut comporter un deuxième photodétecteur (notamment un seul deuxième photodétecteur) agencé de telle sorte que le système 3 n'intercepte pas les rayons issus du champ solaire 101 et orientés vers le deuxième photodétecteur, et le procédé comporte alors au moins un ensemble d'étapes mis en oeuvre pour chaque position de mesure principale comprenant : un placement desdits premiers photodétecteurs à des positions d'acquisition définies comme les position occupées par lesdits premiers photodétecteurs dans ladite position de mesure principale du dispositif de mesure, puis une détermination à partir desdits premiers photodétecteurs 2a, 2b, 2c, 2d placés dans lesdites positions d'acquisition de flux relatifs issus du champ solaire 101 pour au moins les première et deuxième configurations du système 3 ; un placement du deuxième photodétecteur dans une des positions d'acquisition d'où il résulte que le dispositif de mesure 1 occupe une position de mesure secondaire différente de ladite position de mesure principale, puis une détermination à partir dudit deuxième photodétecteur placé dans la position d'acquisition d'un flux étalon ; et le procédé comporte une étape d'utilisation des flux étalons déterminés et des flux relatifs déterminés pour élaborer une cartographie des flux perçus par le récepteur 102 et issus du champ solaire 101. Selon un perfectionnement les premiers photodétecteurs 2a, 2b, 2c, 2d sont chacun formé par une cellule photovoltaïque (ainsi que notamment ledit deuxième photodétecteur) et le dispositif de mesure 1 comporte une jauge de flux à effet thermique 15 associée à un photodétecteur de référence 2c choisi parmi les premiers photodétecteurs 2a, 2b, 2c, 2d. Dans ce cas, l'ensemble d'étapes comporte aussi une étape de placement de la jauge de flux à effet thermique à ladite position d'acquisition du photodétecteur de référence d'où il résulte que le dispositif de mesure occupe une position distincte de ladite position de mesure principale, et une étape de détermination d'un flux de référence à partir de ladite jauge de flux à effet thermique placée à ladite position d'acquisition. L'étape d'utilisation peut alors en outre comporter l'utilisation de chaque flux de référence pour élaborer une cartographie des flux perçus par le récepteur et issus du champ solaire.

Préférentiellement, dans le cadre de la centrale solaire ou du procédé, pour chaque position de mesure principale du dispositif de mesure, chaque configuration du système choisie parmi au moins les première et deuxième configuration, est telle que les premiers photodétecteurs 2a, 2b, 2c, 2c ne perçoivent des rayons issu du champ solaire ne provenant que d'un réflecteur. Autrement dit, pour une configuration donnée du système 3, les zones surveillées appartiennent toutes à un seul réflecteur. Ceci permet de faciliter les traitements après mesure pour déterminer les flux relatifs et/ou absolus issus d'un réflecteur en particulier.

On comprend de ce qui a été dit précédemment que la distribution du flux incident au récepteur 102 et issu de chaque réflecteur peut être déterminée, notamment à partir de mesures, ce qui permet de détecter d'éventuelles dérives dans le suivi solaire de chaque réflecteur de manière individuelle. Ce dispositif de mesure peut donc venir en appui à un système de suivi solaire déjà en place. Alternativement, de manière plus avantageusement, la commande du mouvement de la motorisation d'un réflecteur peut être fonction uniquement des données issues du dispositif de mesure 1, on s'affranchit alors des méthodes conventionnelles de suivi solaire du réflecteur passant par le calcul de la position du soleil. L'orientation de chaque réflecteur peut être ajustée pour maximiser le facteur d'interception correspondant au rapport de l'énergie interceptée par l'absorbeur sur l'énergie réfléchie par le champ solaire.

De plus, l'analyse de la forme et de la distribution des flux déterminés permet d'identifier des défauts sur les réflecteurs (miroirs cassés, défauts de forme, poussières) et d'identifier des zones du champ solaires ombrées par des nuages. Il est également possible de déduire la distribution de flux total incidente au récepteur 102 en sommant les contributions de chaque réflecteur.

Pour finir, grâce à la connaissance de la forme et de la distribution du flux incident au récepteur 102 issu de chaque réflecteur, ainsi que de sa localisation par rapport à l'absorbeur, des stratégies de pointage peuvent être mise en oeuvre de manière efficace pour uniformiser le flux incident à l'absorbeur. Ceci permet d'éviter la formation de points chauds au niveau de l'absorbeur, minimisant les dilatations différentielles entre les tubes de l'absorbeur dans le cas d'un absorbeur multi tubes, et limitant par la même la dégradation d'une couche sélective de l'absorbeur et éventuellement du fluide caloporteur. Cette couche sélective peut être une peinture, soit un dépôt sous vide appliqué sur les tubes absorbeurs, leur fonction est d'augmenter l'absorption et de réduire l'émission infrarouge de l'absorbeur pour permettre une meilleure efficacité thermique d'échange entre les rayons incidents au récepteur et le fluide caloporteur
Une limitation au dispositif de mesure 1 dans le cadre de l'utilisation de cellules photovoltaïques et d'une jauge de flux à effet thermique réside dans le fait que la jauge de flux à effet thermique et les cellules triples jonctions n'ont pas la même taille, ce qui fausse la correspondance des deux réponses. En effet, le flux n'étant pas constant sur la surface des cellules et de la jauge, la densité de flux moyenne mesurée dépend de leurs surfaces. On solutionne cette limite en positionnant ces cellules et jauge sur une zone ou le flux évolue de manière linéaire. Ainsi, la densité de flux incidente moyenne sur chacun des deux capteurs reste la même et la correspondance reste valable.

Dans le cas de l'utilisation d'une jauge de flux à effet thermique, les premiers photodétecteurs, et le cas échéant le ou les deuxièmes photodétecteurs sont préférentiellement des cellules photovoltaïques.

Notamment, on comprend de ce qui a été dit dans la présente description, que lorsque l'on mesure/détermine un flux, que cela soit un flux relatif, un flux étalon, un flux de référence, ou autre, il s'agit d'un flux issu du champ solaire.

## Revendications

1. Dispositif de mesure (1) de flux réfléchis par un champ solaire (101) d'une centrale solaire (100) en direction d'un récepteur (102) de la centrale solaire et destiné à être monté au niveau du récepteur (102), ledit dispositif de mesure (1) comportant :
• des premiers photodétecteurs (2a, 2b, 2c, 2d) alignés selon un axe d'alignement (A1) correspondant, et
• un système (3) configuré de sorte à délimiter pour chaque premier photodétecteur (2a, 2b, 2c, 2d), dans une configuration d'utilisation du dispositif de mesure (1), une zone à surveiller du champ solaire (101), ledit système (3) étant apte à varier entre une première configuration par rapport aux premiers photodétecteurs (2a, 2b, 2c, 2d) et une deuxième configuration par rapport aux premiers photodétecteurs (2a, 2b, 2c, 2d) de telle sorte que le passage de la première configuration à la deuxième configuration modifie simultanément la zone à surveiller de chacun des premiers photodétecteurs (2a, 2b, 2c, 2d),
**caractérisé en ce que** le système (3) comporte un cache (7) présentant une mobilité par rapport aux premiers photodétecteurs (2a, 2b, 2c, 2d), ledit cache (7) étant configuré de sorte à permettre pour chaque position du cache (7) par rapport aux premiers photodétecteurs (2a, 2b, 2c, 2d), d'une part, d'empêcher une première partie des rayons issus du champ solaire (101) d'atteindre les premiers photodétecteurs (2a, 2b, 2c, 2d) et, d'autre part, d'autoriser le passage d'une deuxième partie des rayons issus du champ solaire (101) en direction des premiers photodétecteurs (2a, 2b, 2c, 2d), et **en ce que** la mobilité du cache (7) par rapport aux premiers photodétecteurs (2a, 2b, 2c, 2d) permet le passage de la première configuration à la deuxième configuration.

2. Dispositif selon la revendication 1, **caractérisé en ce que** le cache (7) comporte une pluralité de lames (8a, 8b, 8c, 8d, 8e) montées à pivotement sur un support (6) du dispositif de mesure (1) intégrant les premiers photodétecteurs (2a, 2b, 2c, 2d), les axe de pivotement (A2, A3, A4, A5, A6) des lames étant sensiblement orthogonaux, notamment perpendiculaires, à l'axe d'alignement (A1) des premiers photodétecteurs (2a, 2b, 2c, 2d), les axes de pivotements (A2, A3, A4, A5, A6) desdites lames (8a, 8b, 8c, 8d, 8e) étant sensiblement parallèles entre eux, le mouvement possible des lames (8a, 8b, 8c, 8d, 8e) via les axes de pivotement (A2, A3, A4, A5, A6) correspondant à la mobilité du cache (7).

3. Dispositif selon la revendication précédente, **caractérisé en ce que** pour chaque couple de premiers photodétecteurs adjacents, une lame de la pluralité de lames est montée à pivotement entre lesdits premiers photodétecteurs dudit couple, et **en ce que** la ligne de premiers photodétecteurs (2a, 2b, 2c, 2d) est encadrée par deux lames (8a, 8e) de la pluralité de lames (8a, 8b, 8c, 8d, 8e), les lames (8a, 8b, 8c, 8d, 8e) de la pluralité de lames étant de préférence solidaires en mouvement, et restant notamment toutes parallèles les unes aux autres quel que soit l'angle de pivotement desdites lames (8a, 8b, 8c, 8d, 8e) par rapport à leurs axes de pivotement respectifs (A2, A3, A4, A5, A6).

4. Dispositif selon la revendication 1, **caractérisé en ce que** le cache (7) comporte un organe (11), notamment une plaque, présentant une fente (12) allongée dans une direction sensiblement orthogonale à l'axe d'alignement (A1) des premiers photodétecteurs (2a, 2b, 2c, 2d), et **en ce que** quelle que soit la position de la fente (12) par rapport auxdits premiers photodétecteurs (2a, 2b, 2c, 2d), les seuls rayons issus du champ solaire (101) et vus par lesdits premiers photodétecteurs (2a, 2b, 2c, 2d) passent par cette fente (12).

5. Dispositif selon l'une quelconque des revendications précédentes, **caractérisé en ce qu'**il comporte :
• des deuxièmes photodétecteurs (14a, 14b, 14c, 14d) dont le nombre est égal à celui des premiers photodétecteurs (2a, 2b, 2c, 2d), les deuxièmes photodétecteurs (14a, 14b, 14c, 14d) étant alignés selon un axe d'alignement (A7) parallèle à l'axe d'alignement (A1) des premiers photodétecteurs (2a, 2b, 2c, 2d), et ledit système (3) n'interceptant aucun des rayons issus du champ solaire (101) en direction desdits deuxièmes photodétecteurs (14a, 14b, 14c, 14d), ou
• un seul deuxième photodétecteur, ledit système (3) n'interceptant aucun des rayons issus du champ solaire (101) en direction dudit deuxième photodétecteur (14a, 14b, 14c, 14d).

6. Dispositif selon l'une quelconque des revendications précédentes, **caractérisé en ce qu'**il comprend un module d'analyse (13) relié à chacun des premiers photodétecteurs (2a, 2b, 2c, 2d) et configuré de sorte à traiter les données issues des premiers photodétecteurs (2a, 2b, 2c, 2d) pour établir une cartographie du flux solaire réfléchi par le champ solaire (101) en direction du récepteur (102).

7. Dispositif selon l'une quelconque des revendications précédentes, **caractérisé en ce qu'**il comporte une jauge de flux à effet thermique (15) associée à l'un des premiers photodétecteurs (2c), notamment ledit un des premiers photodétecteurs (2c) est aligné avec la jauge de flux à effet thermique (15) selon un axe orthogonal, et notamment perpendiculaire, à l'axe d'alignement (A1) desdits premiers photodétecteurs (2a, 2b, 2c, 2d).

8. Centrale solaire (100) comprenant un récepteur (102) et un champ solaire (101) muni de réflecteurs (101a, 101b, 101c, 101d, 101e) orientables pour réfléchir les rayons solaires en direction du récepteur (102), **caractérisée en ce qu'**elle comporte un dispositif de mesure (1) selon l'une quelconque des revendications précédentes disposé au niveau du récepteur (102).

9. Procédé d'utilisation du dispositif de mesure (1) d'une centrale solaire (100) selon la revendication 8, **caractérisé en ce qu'**il comporte une étape de placement (E1) du dispositif de mesure (1) à une pluralité de positions de mesure principale par rapport au récepteur (102), et **en ce qu'**il comporte une étape de mesure (E1-1) mise en oeuvre par les premiers photodétecteurs (2a, 2b, 2c, 2d) selon au moins la première configuration du système (3) et la deuxième configuration du système (3), préférentiellement ladite étape de mesure est mise en oeuvre pour chaque position de mesure principale, l'étape de placement (E1) du dispositif de mesure (1) consistant de préférence à déplacer le dispositif de mesure (1) le long du récepteur (102) de telle sorte qu'en toute position de mesure principale, l'axe d'alignement (A1) des photodétecteurs (2a, 2b, 2c, 2d) est sensiblement orthogonal à l'axe longitudinal du récepteur (102).

10. Procédé selon la revendication 9, **caractérisé en ce que** :
• le dispositif de mesure (1) comporte au moins un deuxième photodétecteur agencé de telle sorte que le système (3) n'intercepte pas les rayons issus du champ solaire (101) et orientés vers chaque deuxième photodétecteur,
• les premiers photodétecteurs (2a, 2b, 2c, 2d) et chaque deuxième photodétecteur sont chacun formé par une cellule photovoltaïque,
• le dispositif de mesure (1) comporte une jauge de flux à effet thermique (15) associée à un photodétecteur de référence choisi parmi les premiers photodétecteurs (2a, 2b, 2c, 2d),
et **en ce que** chaque étape de mesure (E1-1) consiste à déterminer des flux relatifs par chacun des premiers photodétecteurs (2a, 2b, 2c, 2d) et pour chaque configuration du système (3) à ladite position de mesure principale correspondante, un flux étalon par chaque deuxième photodétecteur à ladite position de mesure principale correspondante, et un flux de référence par ladite jauge de flux à effet thermique (15) à ladite position de mesure principale correspondante,
et **en ce que** le procédé comporte une étape d'utilisation de chaque flux étalon déterminé, des flux relatifs déterminés et de chaque flux de référence déterminé pour élaborer une cartographie des flux perçus par le récepteur (102) et issus du champ solaire (101).

11. Procédé selon la revendication 9, **caractérisé en ce que** le dispositif de mesure (1) comporte des deuxièmes photodétecteurs (14a 14b, 14c, 14d) alignés selon un axe (A7) sensiblement parallèle à l'axe d'alignement (A1) des premiers photodétecteurs (2a, 2b, 2c, 2d) et agencés de telle sorte que le système (3) n'intercepte pas les rayons issus du champ solaire (101) et orientés vers les deuxièmes photodétecteurs (14a 14b, 14c, 14d), et **en ce que** le procédé comporte au moins un ensemble d'étapes (E100) mis en oeuvre pour chaque premier photodétecteur (2a, 2b, 2c, 2d), ledit ensemble d'étapes (E100) comprenant :
• un placement (E100-1) dudit premier photodétecteur (2a, 2b, 2c, 2d) à une position d'acquisition définie comme la position occupée par ledit premier photodétecteur (2a, 2b, 2c, 2d) dans une des positions de mesure principale du dispositif de mesure (1), puis une détermination (E100-2) à partir dudit premier photodétecteur (2a, 2b, 2c, 2d) placé dans ladite position d'acquisition de flux relatifs issus du champ solaire (101) pour au moins les première et deuxième configurations du système (3),
• un placement (E100-3) d'un des deuxièmes photodétecteurs (14a 14b, 14c, 14d) associé audit premier photodétecteur (2a, 2b, 2c, 2d) à ladite position d'acquisition d'où il résulte que le dispositif de mesure (1) occupe une position de mesure secondaire différente de ladite une des positions de mesure principale, puis une détermination (E100-4) à partir dudit un des deuxièmes photodétecteurs (14a 14b, 14c, 14d) placé dans la position d'acquisition d'un flux étalon,
et **en ce que** le procédé comporte une étape d'utilisation (E101) des flux étalons déterminés et des flux relatifs déterminés pour élaborer une cartographie des flux perçus par le récepteur (102) et issus du champ solaire (101), l'ensemble d'étapes (E101) étant de préférence mis en oeuvre en association avec chaque position de mesure principale.

12. Procédé selon la revendication 11, **caractérisé en ce que** :
• les premiers photodétecteurs (2a, 2b, 2c, 2d) sont chacun formé par une cellule photovoltaïque,
• le dispositif de mesure (1) comporte une jauge de flux à effet thermique (15) associée à un photodétecteur de référence (2c) choisi parmi les premiers photodétecteurs (2a, 2b, 2c, 2d),
• l'ensemble d'étapes (E100) associé audit photodétecteur de référence (2c) comporte une étape de placement (E100-5) de la jauge de flux à effet thermique (15) à ladite position d'acquisition d'où il résulte que le dispositif de mesure (1) occupe une position de mesure additionnelle différente de ladite une des positions de mesure principale et de ladite position de mesure secondaire correspondantes, puis une étape de détermination (E100-6) à partir de ladite jauge thermique d'un flux de référence,
et **en ce que** l'étape d'utilisation (E101) comporte en outre l'utilisation de chaque flux de référence déterminé.

13. Procédé selon la revendication 9, **caractérisé en ce que** :
• les premiers photodétecteurs (2a, 2b, 2c, 2d) sont chacun formé par une cellule photovoltaïque,
• le dispositif de mesure (1) comporte une jauge de flux à effet thermique (15) associée à un photodétecteur de référence (2c) choisi parmi les premiers photodétecteurs (2a, 2b, 2c, 2d),
et **en ce que** le procédé comporte, en association avec chaque position de mesure principale, les étapes suivantes :
• une étape de placement (E1000) desdits premiers photodétecteurs (2a, 2b, 2c, 2d) à des positions d'acquisition définies comme les positions occupées par lesdits premiers photodétecteurs (2a, 2b, 2c, 2d) dans ladite position de mesure principale du dispositif de mesure (1),
• une étape de détermination (E1001), pour chacun des premiers photodétecteurs (2a, 2b, 2c, 2d) placé dans sa position d'acquisition, de flux relatifs pour au moins les première et deuxième configurations du système (3),
• une étape de placement (E1002) de la jauge de flux à effet thermique (15) à ladite position d'acquisition du photodétecteur de référence (2c) d'où il résulte que le dispositif de mesure (1) occupe une position distincte de ladite position de mesure principale, et une étape de détermination d'un flux de référence à partir de ladite jauge de flux à effet thermique (15) placée à ladite position d'acquisition,
et **en ce que** procédé comporte une étape d'utilisation (E1004) des flux de référence déterminés et des flux relatifs déterminés pour élaborer une cartographie des flux perçus par le récepteur et issus du champ solaire.

14. Procédé selon la revendication 9, **caractérisé en ce que** le dispositif de mesure (1) comporte un deuxième photodétecteur agencé de telle sorte que le système (3) n'intercepte pas les rayons issus du champ solaire (101) et orientés vers le deuxième photodétecteur, et **en ce que** le procédé comporte au moins un ensemble d'étapes mis en oeuvre pour chaque position de mesure principale comprenant :
• un placement desdits premiers photodétecteurs (2a, 2b, 2c, 2d) à des positions d'acquisition définies comme les positions occupées par lesdits premiers photodétecteurs (2a, 2b, 2c, 2d) dans ladite position de mesure principale du dispositif de mesure (1), puis une détermination (E100-2) à partir desdits premiers photodétecteurs (2a, 2b, 2c, 2d) placés dans lesdites positions d'acquisition de flux relatifs issus du champ solaire (101) pour au moins les première et deuxième configurations du système (3),
• un placement du deuxième photodétecteur dans une des positions d'acquisition d'où il résulte que le dispositif de mesure (1) occupe une position de mesure secondaire différente de ladite position de mesure principale, puis une détermination à partir dudit deuxième photodétecteur placé dans la position d'acquisition d'un flux étalon,
et **en ce que** le procédé comporte une étape d'utilisation des flux étalons déterminés et des flux relatifs déterminés pour élaborer une cartographie des flux perçus par le récepteur (102) et issus du champ solaire (101).

## Patentansprüche

1. Vorrichtung zur Messung (1) von Energieflüssen, die von einem Solarfeld (101) einer Solaranlage (100) in Richtung eines Empfängers (102) der Solaranlage reflektiert werden, und die dazu bestimmt ist, am Empfänger (102) angebracht zu werden, wobei die Messvorrichtung (1) aufweist:
• erste Photodetektoren (2a, 2b, 2c, 2d), die entlang einer entsprechenden Ausrichtungsachse (A1) ausgerichtet sind, und
• ein System (3), das dafür ausgelegt ist, für jeden ersten Photodetektor (2a, 2b, 2c, 2d) in einer Verwendungskonfiguration der Messvorrichtung (1) einen zu überwachenden Bereich des Solarfeldes (101) zu begrenzen, wobei das System (3) in der Lage ist, zwischen einer ersten Konfiguration in Bezug auf die ersten Photodetektoren (2a, 2b, 2c, 2d) und einer zweiten Konfiguration in Bezug auf die ersten Photodetektoren (2a, 2b, 2c, 2d) zu variieren, derart, dass der Übergang von der ersten Konfiguration zur zweiten Konfiguration gleichzeitig den zu überwachenden Bereich jedes der ersten Photodetektoren (2a, 2b, 2c, 2d) ändert,
**dadurch gekennzeichnet, dass** das System (3) eine Abdeckvorrichtung (7) umfasst, die eine Beweglichkeit in Bezug auf die ersten Photodetektoren (2a, 2b, 2c, 2d) aufweist, wobei die Abdeckvorrichtung (7) dafür ausgelegt ist, für jede Position der Abdeckvorrichtung (7) in Bezug auf die ersten Photodetektoren (2a, 2b, 2c, 2d) einerseits zu verhindern, dass ein erster Teil der von dem Solarfeld (101) ausgehenden Strahlen die ersten Photodetektoren (2a, 2b, 2c, 2d) erreicht, und andererseits den Durchgang eines zweiten Teils der von dem Solarfeld (101) ausgehenden Strahlen in Richtung der ersten Photodetektoren (2a, 2b, 2c, 2d) zu erlauben, und dadurch, dass die Beweglichkeit der Abdeckvorrichtung (7) in Bezug auf die ersten Photodetektoren (2a, 2b, 2c, 2d) den Übergang von der ersten Konfiguration zur zweiten Konfiguration ermöglicht.

2. Vorrichtung nach Anspruch 1, **dadurch gekennzeichnet, dass** die Abdeckvorrichtung (7) mehrere Lamellen (8a, 8b, 8c, 8d, 8e) umfasst, die schwenkbar auf einem Träger (6) der Messvorrichtung (1), in welche die ersten Photodetektoren (2a, 2b, 2c, 2d) integriert sind, angebracht sind, wobei die Schwenkachsen (A2, A3, A4, A5, A6) der Lamellen im Wesentlichen orthogonal, insbesondere senkrecht, zu der Ausrichtungsachse (A1) der ersten Photodetektoren (2a, 2b, 2c, 2d) sind, wobei die Schwenkachsen (A2, A3, A4, A5, A6) der Lamellen (8a, 8b, 8c, 8d, 8e) im Wesentlichen parallel zueinander sind, wobei die mögliche Bewegung der Lamellen (8a, 8b, 8c, 8d, 8e) über die Schwenkachsen (A2, A3, A4, A5, A6) der Beweglichkeit der Abdeckvorrichtung (7) entsprechen.

3. Vorrichtung nach dem vorhergehenden Anspruch, **dadurch gekennzeichnet, dass** für jedes Paar von benachbarten ersten Photodetektoren eine Lamelle der mehreren Lamellen schwenkbar zwischen den ersten Photodetektoren des Paares gelagert ist, und dadurch, dass die Reihe von ersten Photodetektoren (2a, 2b, 2c, 2d) von zwei Lamellen (8a, 8e) der mehreren Lamellen (8a, 8b, 8c, 8d, 8e) umrahmt wird, wobei die Lamellen (8a, 8b, 8c, 8d, 8e) der mehreren Lamellen vorzugsweise in der Bewegung fest verbunden sind und insbesondere alle parallel zueinander bleiben, unabhängig vom Schwenkwinkel der Lamellen (8a, 8b, 8c, 8d, 8e) in Bezug auf ihre jeweiligen Schwenkachsen (A2, A3, A4, A5, A6).

4. Vorrichtung nach Anspruch 1, **dadurch gekennzeichnet, dass** die Abdeckvorrichtung (7) ein Organ (11), insbesondere eine Platte, umfasst, das einen Schlitz (12) aufweist, der in einer zur Ausrichtungsachse (A1) der ersten Photodetektoren (2a, 2b, 2c, 2d) im Wesentlichen orthogonalen Richtung lang gestreckt ist, und dadurch, dass unabhängig von der Position des Schlitzes (12) in Bezug auf die ersten Photodetektoren (2a, 2b, 2c, 2d) nur die Strahlen, die vom Solarfeld (101) ausgehen und von den ersten Photodetektoren (2a, 2b, 2c, 2d) gesehen werden, diesen Schlitz (12) passieren.

5. Vorrichtung nach einem der vorhergehenden Ansprüche, **dadurch gekennzeichnet, dass** sie umfasst:
• zweite Photodetektoren (14a, 14b, 14c, 14d), deren Anzahl gleich derjenigen der ersten Photodetektoren (2a, 2b, 2c, 2d) ist, wobei die zweiten Photodetektoren (14a, 14b, 14c, 14d) entlang einer Ausrichtungsachse (A7) ausgerichtet sind, die zur Ausrichtungsachse (A1) der ersten Photodetektoren (2a, 2b, 2c, 2d) parallel ist, und wobei das System (3) keinen der Strahlen unterbricht, die von dem Solarfeld (101) in Richtung der zweiten Photodetektoren (14a, 14b, 14c, 14d) ausgehen, oder
• einen einzigen zweiten Photodetektor, wobei das System (3) keinen der Strahlen unterbricht, die von dem Solarfeld (101) in Richtung des zweiten Photodetektors (14a, 14b, 14c, 14d) ausgehen.

6. Vorrichtung nach einem der vorhergehenden Ansprüche, **dadurch gekennzeichnet, dass** sie ein Analysemodul (13) umfasst, das mit jedem der ersten Photodetektoren (2a, 2b, 2c, 2d) verbunden ist und dafür ausgelegt ist, die von den ersten Photodetektoren (2a, 2b, 2c, 2d) stammenden Daten zu verarbeiten, um ein Kennfeld des Sonnenenergieflusses zu erstellen, der von dem Solarfeld (101) in Richtung des Empfängers (102) reflektiert wird.

7. Vorrichtung nach einem der vorhergehenden Ansprüche, **dadurch gekennzeichnet, dass** sie einen auf dem Thermoeffekt basierenden Energieflussmesser (15) umfasst, der einem der ersten Photodetektoren (2c) zugeordnet ist, wobei insbesondere dieser eine der ersten Photodetektoren (2c) mit dem auf dem Thermoeffekt basierenden Energieflussmesser (15) entlang einer Achse ausgerichtet ist, die zur Ausrichtungsachse (A1) der ersten Photodetektoren (2a, 2b, 2c, 2d) orthogonal und insbesondere senkrecht ist.

8. Solaranlage (100), welche einen Empfänger (102) und ein Solarfeld (101), das mit Reflektoren (101a, 101b, 101c, 101d, 101e) ausgestattet sind, die ausrichtbar sind, um die Sonnenstrahlen in Richtung des Empfängers (102) zu reflektieren, umfasst, **dadurch gekennzeichnet, dass** sie eine Messvorrichtung (1) nach einem der vorhergehenden Ansprüche aufweist, die am Empfänger (102) angeordnet ist.

9. Verfahren zur Verwendung der Messvorrichtung (1) einer Solaranlage (100) nach Anspruch 8, **dadurch gekennzeichnet, dass** es einen Schritt der Anordnung (E1) der Messvorrichtung (1) an mehreren Hauptmesspositionen in Bezug auf den Empfänger (102) umfasst, und dadurch, dass es einen Messungsschritt (E1-1) umfasst, der von den ersten Photodetektoren (2a, 2b, 2c, 2d) gemäß wenigstens der ersten Konfiguration des Systems (3) und der zweiten Konfiguration des Systems (3) durchgeführt wird, wobei der Messungsschritt vorzugsweise für jede Hauptmessposition durchgeführt wird, wobei der Schritt der Anordnung (E1) der Messvorrichtung (1) vorzugsweise darin besteht, die Messvorrichtung (1) entlang des Empfängers (102) derart zu verlagern, dass in jeder Hauptmessposition die Ausrichtungsachse (A1) der Photodetektoren (2a, 2b, 2c, 2d) im Wesentlichen orthogonal zur Längsachse des Empfängers (102) ist.

10. Verfahren nach Anspruch 9, **dadurch gekennzeichnet, dass**:
• die Messvorrichtung (1) wenigstens einen zweiten Photodetektor umfasst, der derart angeordnet ist, dass das System (3) die von dem Solarfeld (101) ausgehenden und in Richtung jedes zweiten Photodetektors ausgerichteten Strahlen nicht unterbricht,
• die ersten Photodetektoren (2a, 2b, 2c, 2d) und jeder zweite Photodetektor jeweils von einer Photovoltaikzelle gebildet werden,
• die Messvorrichtung (1) einen auf dem Thermoeffekt basierenden Energieflussmesser (15) umfasst, der einem aus den ersten Photodetektoren (2a, 2b, 2c, 2d) ausgewählten Referenz-Photodetektor zugeordnet ist,
und dadurch, dass der Messungsschritt (E1-1) darin besteht, relative Energieflüsse durch jeden der ersten Photodetektoren (2a, 2b, 2c, 2d) und für jede Konfiguration des Systems (3) in der entsprechenden Hauptmessposition, einen Standard-Energiefluss durch jeden zweiten Photodetektor in der entsprechenden Hauptmessposition und einen Referenz-Energiefluss durch den auf dem Thermoeffekt basierenden Energieflussmesser (15) in der entsprechenden Hauptmessposition zu bestimmen, und dadurch, dass das Verfahren einen Schritt der Verwendung jedes bestimmten Standard-Energieflusses, der bestimmten relativen Energieflüsse und jedes bestimmten Referenz-Energieflusses, um ein Kennfeld der von dem Empfänger (102) wahrgenommenen und von dem Solarfeld (101) ausgehenden Energieflüsse zu erstellen, umfasst.

11. Verfahren nach Anspruch 9, **dadurch gekennzeichnet, dass** die Messvorrichtung (1) zweite Photodetektoren (14a 14b, 14c, 14d) umfasst, die entlang einer Achse (A7) ausgerichtet sind, die im Wesentlichen parallel zur Ausrichtungsachse (A1) der ersten Photodetektoren (2a, 2b, 2c, 2d) ist, und die derart angeordnet sind, dass das System (3) die Strahlen, die von dem Solarfeld (101) ausgehen und in Richtung der zweiten Photodetektoren (14a 14b, 14c, 14d) ausgerichtet sind, nicht unterbricht, und dadurch, dass das Verfahren wenigstens eine Gesamtheit von Schritten (E100) umfasst, die für jeden ersten Photodetektor (2a, 2b, 2c, 2d) durchgeführt werden, wobei die Gesamtheit von Schritten (E100) umfasst:
• eine Anordnung (E100-1) des ersten Photodetektors (2a, 2b, 2c, 2d) an einer Erfassungsposition, die als die Position definiert ist, welche von dem ersten Photodetektor (2a, 2b, 2c, 2d) in einer der Hauptmesspositionen der Messvorrichtung (1) eingenommen wird, anschließend eine Bestimmung (E100-2), anhand des in der Erfassungsposition angeordneten ersten Photodetektors (2a, 2b, 2c, 2d), von relativen Energieflüssen, die von dem Solarfeld (101) ausgehen, für wenigstens die erste und die zweite Konfiguration des Systems (3),
• eine Anordnung (E100-3) eines der zweiten Photodetektoren (14a 14b, 14c, 14d), welcher dem ersten Photodetektor (2a, 2b, 2c, 2d) zugeordnet ist, an der Erfassungsposition, woraus resultiert, dass die Messvorrichtung (1) eine sekundäre Messposition einnimmt, die von der einen der Hauptmesspositionen verschieden ist, anschließend eine Bestimmung (E100-4), anhand des einen der zweiten Photodetektoren (14a 14b, 14c, 14d), der in der Erfassungsposition angeordnet ist, eines Standard-Energieflusses,
und dadurch, dass das Verfahren einen Schritt der Verwendung (E101) der bestimmten Standard-Energieflüsse und der bestimmten relativen Energieflüsse, um ein Kennfeld der von dem Empfänger (102) wahrgenommenen und von dem Solarfeld (101) ausgehenden Energieflüsse zu erstellen, umfasst, wobei die Gesamtheit von Schritten (E101) vorzugsweise in Verbindung mit jeder Hauptmessposition durchgeführt wird.

12. Verfahren nach Anspruch 11, **dadurch gekennzeichnet, dass**:
• die ersten Photodetektoren (2a, 2b, 2c, 2d) jeweils von einer Photovoltaikzelle gebildet werden,
• die Messvorrichtung (1) einen auf dem Thermoeffekt basierenden Energieflussmesser (15) umfasst, der einem aus den ersten Photodetektoren (2a, 2b, 2c, 2d) ausgewählten Referenz-Photodetektor (2c) zugeordnet ist,
• die Gesamtheit von Schritten (E100), die dem Referenz-Photodetektor (2c) zugeordnet ist, einen Schritt der Anordnung (E100-5) des auf dem Thermoeffekt basierenden Energieflussmessers (15) an der Erfassungsposition umfasst, woraus resultiert, dass die Messvorrichtung (1) eine zusätzliche Messposition einnimmt, die von der entsprechenden einen der Hauptmesspositionen und der entsprechenden sekundären Messposition verschieden ist, anschließend einen Schritt der Bestimmung (E100-6) eines Referenz-Energieflusses anhand der thermischen Messeinrichtung,
und dadurch, dass der Schritt der Verwendung (E101) außerdem die Verwendung jedes bestimmten Referenz-Energieflusses umfasst.

13. Verfahren nach Anspruch 9, **dadurch gekennzeichnet, dass**:
• die ersten Photodetektoren (2a, 2b, 2c, 2d) jeweils von einer Photovoltaikzelle gebildet werden,
• die Messvorrichtung (1) einen auf dem Thermoeffekt basierenden Energieflussmesser (15) umfasst, der einem aus den ersten Photodetektoren (2a, 2b, 2c, 2d) ausgewählten Referenz-Photodetektor (2c) zugeordnet ist,
und dadurch, dass das Verfahren in Verbindung mit jeder Hauptmessposition die folgenden Schritte umfasst:
• einen Schritt der Anordnung (E1000) der ersten Photodetektoren (2a, 2b, 2c, 2d) an Erfassungspositionen, die als die Positionen definiert sind, welche von den ersten Photodetektoren (2a, 2b, 2c, 2d) in der Hauptmessposition der Messvorrichtung (1) eingenommen werden,
• einen Schritt der Bestimmung (E1001), für jeden der ersten Photodetektoren (2a, 2b, 2c, 2d), der in seiner Erfassungsposition angeordnet ist, von relativen Energieflüssen für wenigstens die erste und die zweite Konfiguration des Systems (3),
• einen Schritt der Anordnung (E1002) des auf dem Thermoeffekt basierenden Energieflussmessers (15) an der Erfassungsposition des Referenz-Photodetektors (2c), woraus resultiert, dass die Messvorrichtung (1) eine Position einnimmt, die von der Hauptmessposition verschieden ist, und einen Schritt der Bestimmung eines Referenz-Energieflusses anhand des auf dem Thermoeffekt basierenden Energieflussmessers (15), der an der Erfassungsposition angeordnet ist,
und dadurch, dass das Verfahren einen Schritt der Verwendung (E1004) der bestimmten Referenz-Energieflüsse und der bestimmten relativen Energieflüsse, um ein Kennfeld der von dem Empfänger wahrgenommenen und von dem Solarfeld ausgehenden Energieflüsse zu erstellen, umfasst.

14. Verfahren nach Anspruch 9, **dadurch gekennzeichnet, dass** die Messvorrichtung (1) einen zweiten Photodetektor umfasst, der derart angeordnet ist, dass das System (3) die von dem Solarfeld (101) ausgehenden und in Richtung des zweiten Photodetektors ausgerichteten Strahlen nicht unterbricht, und dadurch, dass das Verfahren wenigstens eine Gesamtheit von für jede Hauptmessposition durchgeführten Schritten umfasst, welche umfasst:
• eine Anordnung der ersten Photodetektoren (2a, 2b, 2c, 2d) an Erfassungspositionen, die als die Positionen definiert sind, die von den ersten Photodetektoren (2a, 2b, 2c, 2d) in der Hauptmessposition der Messvorrichtung (1) eingenommen werden, anschließend eine Bestimmung (E100-2), anhand der in den Erfassungspositionen angeordneten ersten Photodetektoren (2a, 2b, 2c, 2d), von relativen Energieflüssen, die von dem Solarfeld (101) ausgehen, für wenigstens die erste und die zweite Konfiguration des Systems (3),
• eine Anordnung des zweiten Photodetektors in einer der Erfassungspositionen, woraus resultiert, dass die Messvorrichtung (1) eine sekundäre Messposition einnimmt, die von der Hauptmessposition verschieden ist, anschließend eine Bestimmung, anhand des in der Erfassungsposition angeordneten zweiten Photodetektors, eines Standard-Energieflusses,
und dadurch, dass das Verfahren einen Schritt der Verwendung der bestimmten Standard-Energieflüsse und der bestimmten relativen Energieflüsse, um ein Kennfeld der von dem Empfänger (102) wahrgenommenen und von dem Solarfeld (101) ausgehenden Energieflüsse zu erstellen, umfasst.

## Claims

1. Device (1) for measuring fluxes reflected by a solar field (101) of a solar power plant (100) in the direction of a receiver (102) of the solar power plant and intended to be mounted at the level of the receiver (102), said measuring device (1) comprising:
• first photodetectors (2a, 2b, 2c, 2d) aligned along a corresponding axis of alignment (A1), and
• a system (3) configured so as to delineate for each first photodetector (2a, 2b, 2c, 2d), in a configuration of use of the measuring device (1), a zone to be monitored of the solar field (101), said system (3) being able to vary between a first configuration relative to the first photodetectors (2a, 2b, 2c, 2d) and a second configuration relative to the first photodetectors (2a, 2b, 2c, 2d) so that the passage from the first configuration to the second configuration simultaneously modifies the zone to be monitored of each of the first photodetectors (2a, 2b, 2c, 2d),
**characterized in that** the system (3) comprises a shield (7) having a mobility relative to the first photodetectors (2a, 2b, 2c, 2d), said shield (7) being configured so as to make it possible for each position of the shield (7) relative to the first photodetectors (2a, 2b, 2c, 2d), on the one hand, to prevent a first portion of the rays issuing from the solar field (101) to reach the first photodetectors (2a, 2b, 2c, 2d) and, on the other hand, to allow the passage of a second portion of the rays issuing from the solar field (101) in the direction of the first photodetectors (2a, 2b, 2c, 2d), and **in that** the mobility of the shield (7) relative to the first photodetectors (2a, 2b, 2c, 2d) allows the passage from the first configuration to the second configuration.

2. Device according to Claim 1, **characterized in that** the shield (7) comprises a plurality of blades (8a, 8b, 8c, 8d, 8e) pivotably mounted on a support (6) of the measuring device (1) integrating the first photodetectors (2a, 2b, 2c, 2d), the axes of pivoting (A2, A3, A4, A5, A6) of the blades being substantially orthogonal, notably perpendicular, to the axis of alignment (A1) of the first photodetectors (2a, 2b, 2c, 2d), the axes of pivoting (A2, A3, A4, A5, A6) of said blades (8a, 8b, 8c, 8d, 8e) being substantially parallel to one another, the possible movement of the blades (8a, 8b, 8c, 8d, 8e) via the axes of pivoting (A2, A3, A4, A5, A6) corresponding to the mobility of the shield (7).

3. Device according to the preceding claim, **characterized in that** for each pair of adjacent first photodetectors, a blade of the plurality of blades is pivotably mounted between said first photodetectors of said pair, and **in that** the line of first photodetectors (2a, 2b, 2c, 2d) is framed by two blades (8a, 8e) of the plurality of blades (8a, 8b, 8c, 8d, 8e), the blades (8a, 8b, 8c, 8d, 8e) of the plurality of blades preferably being constrained to move together, and notably all remaining parallel to one another whatever the angle of pivoting of said blades (8a, 8b, 8c, 8d, 8e) relative to their respective axes of pivoting (A2, A3, A4, A5, A6) may be.

4. Device according to Claim 1, **characterized in that** the shield (7) comprises a member (11), notably a plate, having a slot (12) elongated in a direction substantially orthogonal to the axis of alignment (A1) of the first photodetectors (2a, 2b, 2c, 2d), and **in that** whatever the position of the slot (12) relative to said first photodetectors (2a, 2b, 2c, 2d) may be, the only rays issuing from the solar field (101) and seen by said first photodetectors (2a, 2b, 2c, 2d) pass through this slot (12).

5. Device according to any one of the preceding claims, **characterized in that** it comprises:
• second photodetectors (14a, 14b, 14c, 14d) the number of which is equal to that of the first photodetectors (2a, 2b, 2c, 2d), the second photodetectors (14a, 14b, 14c, 14d) being aligned along an axis of alignment (A7) parallel to the axis of alignment (A1) of the first photodetectors (2a, 2b, 2c, 2d), and said system (3) intercepting none of the rays issuing from the solar field (101) in the direction of said second photodetectors (14a, 14b, 14c, 14d), or
• only one second photodetector, said system (3) intercepting none of the rays issuing from the solar field (101) in the direction of said second photodetector (14a, 14b, 14c, 14d).

6. Device according to any one of the preceding claims, **characterized in that** it comprises an analysis module (13) connected to each of the first photodetectors (2a, 2b, 2c, 2d) and configured so as to process the data issuing from the first photodetectors (2a, 2b, 2c, 2d) to establish a map of the solar flux reflected by the solar field (101) in the direction of the receiver (102).

7. Device according to any one of the preceding claims, **characterized in that** it comprises a thermal effect flux gauge (15) associated with one of the first photodetectors (2c), notably said one of the first photodetectors (2c) is aligned with the thermal effect flux gauge (15) along an axis orthogonal, and notably perpendicular, to the axis of alignment (A1) of said first photodetectors (2a, 2b, 2c, 2d).

8. Solar power plant (100) comprising a receiver (102) and a solar field (101) provided with reflectors (101a, 101b, 101c, 101d, 101e) adjustable to reflect the solar rays in the direction of the receiver (102), **characterized in that** it comprises a measuring device (1) according to any one of the preceding claims disposed at the level of the receiver (102).

9. Method of using the measuring device (1) of a solar power plant (100) according to Claim 8, **characterized in that** it comprises a step of placement (E1) of the measuring device (1) at a plurality of principal measuring positions relative to the receiver (102), and **in that** it comprises a measuring step (E1-1) implemented by the first photodetectors (2a, 2b, 2c, 2d) in at least the first configuration of the system (3) and the second configuration of the system (3), preferably said measuring step is implemented for each principal measuring position, the step of placement (E1) of the measuring device (1) preferably consisting in moving the measuring device (1) along the receiver (102) so that in any principal measuring position, the axis of alignment (A1) of the photodetectors (2a, 2b, 2c, 2d) is substantially orthogonal to the longitudinal axis of the receiver (102).

10. Method according to Claim 9, **characterized in that**:
• the measuring device (1) comprises at least one second photodetector arranged such that the system (3) does not intercept the rays issuing from the solar field (101) and oriented toward each second photodetector,
• the first photodetectors (2a, 2b, 2c, 2d) and each second photodetector are each formed by a photovoltaic cell,
• the measuring device (1) comprises a thermal effect flux gauge (15) associated with a reference photodetector chosen among the first photodetectors (2a, 2b, 2c, 2d),
and **in that** each measuring step (E1-1) consists in determining relative fluxes by each of the first photodetectors (2a, 2b, 2c, 2d) and for each configuration of the system (3) at said corresponding principal measuring position, a calibration flux by each second photodetector at said corresponding principal measuring position, and a reference flux by said thermal effect flux gauge (15) at said corresponding principal measuring position,
and **in that** the method comprises a step of utilization of each calibration flux determined, the relative fluxes determined and each reference flux determined to generate a map of the fluxes perceived by the receiver (102) and issuing from the solar field (101).

11. Method according to Claim 9, **characterized in that** the measuring device (1) comprises second photodetectors (14a 14b, 14c, 14d) aligned along an axis (A7) substantially parallel to the axis of alignment (A1) of the first photodetectors (2a, 2b, 2c, 2d) and arranged such that the system (3) does not intercept the rays issuing from the solar field (101) and oriented toward the second photodetectors (14a 14b, 14c, 14d), and **in that** the method comprises at least one set of steps (E100) implemented for each first photodetector (2a, 2b, 2c, 2d), said set of steps (E100) comprising:
• a placement (E100-1) of said first photodetector (2a, 2b, 2c, 2d) at an acquisition position defined as the position occupied by said first photodetector (2a, 2b, 2c, 2d) in one of the principal measuring positions of the measuring device (1), then a determination (E100-2) from said first photodetector (2a, 2b, 2c, 2d) placed in said acquisition position of relative fluxes issuing from the solar field (101) for at least the first and second configurations of the system (3),
• a placement (E100-3) of one of the second photodetectors (14a 14b, 14c, 14d) associated with said first photodetector (2a, 2b, 2c, 2d) at said acquisition position which results in the measuring device (1) occupying a secondary measuring position different from said one of the principal measuring positions, then a determination (E100-4) from said one of the second photodetectors (14a 14b, 14c, 14d) placed in the acquisition position of a calibration flux,
and **in that** the method comprises a step of utilization (E101) of the calibration fluxes determined and the relative fluxes determined to generate a map of the fluxes perceived by the receiver (102) and issuing from the solar field (101), the set of steps (E101) preferably being implemented in association with each principal measuring position.

12. Method according to Claim 11, **characterized in that**:
• the first photodetectors (2a, 2b, 2c, 2d) are each formed by a photovoltaic cell,
• the measuring device (1) comprises a thermal effect flux gauge (15) associated with a reference photodetector (2c) chosen among the first photodetectors (2a, 2b, 2c, 2d),
• the set of steps (E100) associated with said reference photodetector (2c) comprises a step of placement (E100-5) of the thermal effect flux gauge (15) at said acquisition position which results in the measuring device (1) occupying an additional measuring position different from said corresponding one of the principal measuring positions and from said corresponding secondary measuring position, then a step of determination (E100-6) from said thermal gauge of a reference flux,
and **in that** the utilization step (E101) further comprises the use of each reference flux determined.

13. Method according to Claim 9, **characterized in that**:
• the first photodetectors (2a, 2b, 2c, 2d) are each formed by a photovoltaic cell,
• the measuring device (1) comprises a thermal effect flux gauge (15) associated with a reference photodetector (2c) chosen among the first photodetectors (2a, 2b, 2c, 2d),
and **in that** the method comprises, in association with each principal measuring position, the following steps:
• a step of placement (E1000) of said first photodetectors (2a, 2b, 2c, 2d) at acquisition positions defined as the positions occupied by said first photodetectors (2a, 2b, 2c, 2d) in said principal measuring position of the measuring device (1),
• a step of determination (E1001), for each of the first photodetectors (2a, 2b, 2c, 2d) placed in its acquisition position, of relative fluxes for at least the first and second configurations of the system (3),
• a step of placement (E1002) of the thermal effect flux gauge (15) at said acquisition position of the reference photodetector (2c) which results in the measuring device (1) occupying a position distinct from said principal measuring position, and a step of determination of a reference flux from said thermal effect flux gauge (15) placed at said acquisition position,
and **in that** the method comprises a step of utilization (E1004) of the reference fluxes determined and the relative fluxes determined to generate a map of the fluxes perceived by the receiver and issuing from the solar field.

14. Method according to Claim 9, **characterized in that** the measuring device (1) comprises a second photodetector arranged such that the system (3) does not intercept the rays issuing from the solar field (101) and oriented toward the second photodetector, and **in that** the method comprises at least one set of steps implemented for each principal measuring position comprising:
• a placement of said first photodetectors (2a, 2b, 2c, 2d) at acquisition positions defined as the positions occupied by said first photodetectors (2a, 2b, 2c, 2d) in said principal measuring position of the measuring device (1), then a determination (E100-2) from said first photodetectors (2a, 2b, 2c, 2d) placed in said acquisition positions of relative fluxes issuing from the solar field (101) for at least the first and second configurations of the system (3),
• a placement of the second photodetector in one of the acquisition positions which results in the measuring device (1) occupying a secondary measuring position different from said principal measuring position, then a determination from said second photodetector placed in the acquisition position of a calibration flux,
and **in that** the method comprises a step of utilization of the calibration fluxes determined and the relative fluxes determined to generate a map of the fluxes perceived by the receiver (102) and issuing from the solar field (101).
